(19) Europäisches Patentamt / European Patent Office / Office européen des brevets

(11) **EP 2 818 829 B1**

(12) **FASCICULE DE BREVET EUROPEEN**

(45) Date de publication et mention de la délivrance du brevet:
**15.08.2018 Bulletin 2018/33**

(51) Int Cl.:
**G01C 21/16** (2006.01)

(21) Numéro de dépôt: **14305996.2**

(22) Date de dépôt: **24.06.2014**

(54) **SYSTÈME DE NAVIGATION ET DE POINTAGE ET PROCÉDÉ DE CALIBRATION D'UN SYSTÈME DE NAVIGATION ET DE POINTAGE**

NAVIGATIONSSYSTEM, ZEIGEGERÄT, UND KALIBRIERUNGSVERFAHREN EINES NAVIGATIONSYSTEMS UND ZEIGEGERÄTS.

NAVIGATION AND POINTING SYSTEM AND METHOD FOR CALIBRATING A NAVIGATION AND POINTING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2013 FR 1356346**

(43) Date de publication de la demande:
**31.12.2014 Bulletin 2015/01**

(73) Titulaires:
• **iXBlue**
  **78100 Saint-Germain-en-Laye (FR)**
• **Ecole Nationale Supérieure de Techniques Avancées Bretagne**
  **29200 Brest (FR)**

(72) Inventeurs:
• **LE SCOUARNEC, Romain**
  **92800 Puteaux (FR)**
• **TOUZE, Thomas**
  **29460 Irvillac (FR)**
• **LACAMBRE, Jean-Baptiste**
  **75014 Paris (FR)**
• **SEUBE, Nicolas**
  **29200 Brest (FR)**

(74) Mandataire: **Jacobacci Coralis Harle**
  **32, rue de l'Arcade**
  **75008 Paris (FR)**

(56) Documents cités:
• **SOLOVIEV ANDREY ET AL: "Tight Coupling of Laser Scanner and Inertial Measurements for a Fully Autonomous Relative Navigation Solution",** NAVIGATION, INSTITUTE OF NAVIGATION, FAIRFAX, VA, US, vol. 54, no. 3, 1 décembre 2007 (2007-12-01), pages 189-205, XP056004531, ISSN: 0028-1522
• **MARCUS HEBEL ET AL: "Simultaneous Calibration of ALS Systems and Alignment of Multiview LiDAR Scans of Urban Areas",** IEEE TRANSACTIONS ON GEOSCIENCE AND REMOTE SENSING, IEEE SERVICE CENTER, PISCATAWAY, NJ, US, vol. 50, no. 6, 1 juin 2012 (2012-06-01), pages 2364-2379, XP011444350, ISSN: 0196-2892, DOI: 10.1109/TGRS.2011.2171974

**Description**

La présente invention se rapporte à un système de navigation et de pointage dans lequel une centrale de navigation est couplée de manière solidaire à un dispositif de pointage. La centrale de navigation fournit des mesures précises de position et d'orientation du système par rapport à un repère global et le dispositif de pointage fournit une mesure d'un paramètre, par exemple de distance, dans une direction de pointage.

Plus particulièrement, l'invention se rapporte à un système qui couple sur une même plateforme une centrale de navigation inertielle à un lidar (acronyme pour Light Détection And Ranging) à balayage en deux dimensions (ou lidar 2D) ou en trois dimensions (lidar 3D). Plus particulièrement, l'invention concerne une méthode de calibration de l'erreur angulaire de pointage dans un système de navigation et de pointage, par exemple un lidar terrestre à 2D ou à 3D couplé à une centrale de navigation inertielle.

Dans sa conception la plus simple, un lidar est un appareil optique comportant une source laser, qui émet un faisceau laser pulsé dans un axe de visée, appelé aussi direction de pointage, et un système de détection qui mesure le temps de propagation aller et retour du faisceau laser pulsé entre la source laser et la cible, le faisceau laser étant réfléchi ou rétrodiffusé par la cible dans la direction de pointage et en sens inverse du faisceau laser incident. Un lidar permet ainsi de mesurer la distance à une cible.

Il existe des systèmes de navigation et de pointage intégrant à la fois un Lidar et une centrale de navigation, qui indique la position et l'orientation géographique du système, pour permettre de localiser une cible dans l'espace. On connaît en particulier des systèmes de navigation et de pointage dans lesquels un lidar est combiné à une centrale navigation inertielle (SNI ou INS pour Inertial Navigation System), comme décrit par exemple dans l'article "Simultaneous Calibration of ALS Systems and Alignment of Multiview LiDAR Scans of Urban Areas" de M. Hebel et U. Stilla in IEEE Transactions on Geoscience and Remote Sensing, vol. 50, n° 8, juin 2012.

L'article *"*Tight Coupling of Laser Scanner and Inertial Measurements for a Fully Autonomous Relative Navigation Solution" de A. Soloviev, D. Bates et F. van Graas in Navigation : Journal of the Institute of Navigation, vol. 54, n° 3, automne 2007 vise quant à lui à obtenir un système de positionnement relatif 2D autonome.

Dans ces systèmes de navigation et de pointage, il existe différents types de lidar selon les moyens utilisés pour orienter la direction de pointage du faisceau laser dans l'espace :

- un lidar 2D combine un lidar avec un système opto-mécanique à un degré de liberté, par exemple de type miroir rotatif selon un axe orthogonal à l'axe de visée du laser, adapté pour balayer l'orientation du faisceau laser dans un plan de l'espace (i.e. en 2D) et acquérir en retour des mesures suivant une ligne (par exemple par projection sur un plan). Dans le présent document, chaque ligne ainsi acquise s'appelle une ligne de scan ou ligne de balayage ;
- un Lidar 3D combine un Lidar avec un système opto-mécanique à deux degrés de liberté, adapté pour balayer l'orientation du faisceau laser dans toutes les directions de l'espace (i.e. en 3D) et acquérir en retour des mesures provenant de n'importe quel point de l'espace. Par exemple un Lidar 3D peut être constitué d'un Lidar 2D monté sur une table tournante permettant des mouvements rotatifs selon un axe orthogonal à celui du miroir de balayage à 2D.

On appelle « scanner laser » un système intégrant un lidar-2D ou lidar-3D avec un système de positionnement et un système d'orientation.

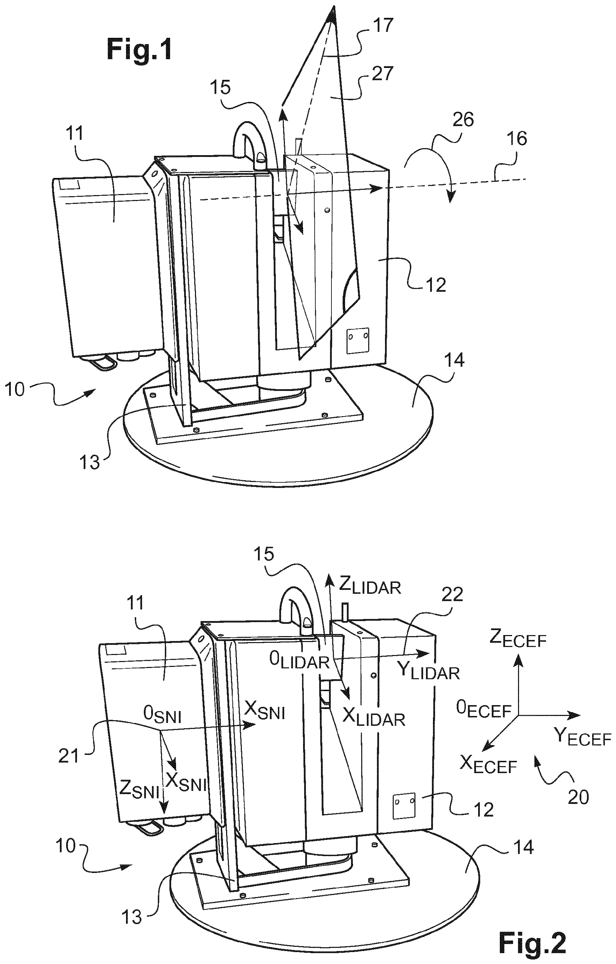

La figure 1 représente un exemple de système de navigation et de pointage 10 comprenant une centrale de navigation inertielle 11 et un lidar 12 reliés mécaniquement par une pièce rigide 13 de manière à ce que le SNI et le lidar soient solidaires. Le lidar 12 comporte une source laser et un système de détection d'un faisceau rétrodiffusé. Le lidar 12 comporte aussi un miroir plan 15 monté mobile en rotation autour d'un axe de rotation 16. Par exemple, la normale au plan du miroir 15 est inclinée à 45 degrés par rapport à la direction d'émission du faisceau laser qui est de préférence coaxiale à l'axe de rotation 16. Par rotation 26 du miroir 15 autour de l'axe de rotation 16, la direction de pointage 17 du faisceau laser balaye un plan 27, ici appelé plan de balayage. On obtient ainsi un lidar à deux dimensions (lidar-2D) qui permet de mesurer la distance d'une cible situé dans le plan de balayage 27. Connaissant la direction de pointage 17 dans le repère de l'INS, il est ensuite possible de fournir les indications de position et d'orientation de la cible par rapport à un repère global.

Selon les dispositifs, la rotation du miroir 15 autour de l'axe de rotation 16 peut être soit continue, et toujours dans le même sens, soit oscillante le miroir 15 effectuant des allers-retours entre deux butées.

Le système de navigation et de pointage 10 est par exemple monté sur une plateforme 14 mobile en rotation autour d'un axe transverse à l'axe de rotation 16 du miroir 15. Une rotation de la plateforme 14 entraîne la rotation de l'ensemble du système 10 et donc la rotation du plan de balayage 27. On obtient ainsi un lidar 3D qui permet de mesurer la distance d'une cible dans une direction de pointage 17 quelconque dans l'espace en trois dimensions (lidar-3D). Afin de pouvoir géo-référencer les points LiDAR, il est nécessaire de coupler le lidar avec d'autres systèmes permettant de connaitre la position et l'orientation du LiDAR.

La position et l'orientation sont en général fournies par un système de positionnement (noté SP) tel qu'un système combinant un système de localisation GPS et une centrale navigation inertielle {GPS+SNI} ou un système de localisation GPS et une centrale de cap et de verticale {GPS+AHRS pour Attitude and Heading Reference System} ou autre. Dans la suite du document, on entend par système de positionnement tout système adapté pour fournir sa position et son orientation dans un repère global sans faire de distinction entre les différents sous-systèmes possibles.

Une centrale AHRS (Attitude Heading Reference Système) ou une centrale SNI (Système de Navigation Inertiel) sont des systèmes fournissant leur orientation dans un repère global tel que le repère ECEF. Reste alors à connaitre l'orientation relative du LiDAR par rapport au système de positionnement et d'orientation qui lui est mécaniquement attaché.

Dans la suite du présent document, on entend par « système LiDAR » un système qui combine un instrument de visée (le LiDAR), un système de positionnement et un système d'orientation. Un tel système lidar fournit ainsi des mesures de position, d'orientation et de visée.

A titre d'exemple illustratif et non limitatif, dans la suite du présent document, un système fournissant l'orientation est illustré par un SNI.

Un repère 21 lié au SNI, appelé ici repère SNI est défini par un centre $O_{SNI}$ et trois axes $X_{SNI}$, $Y_{SNI}$ et $Z_{SNI}$. Par convention, $X_{SNI}$ pointe vers l'avant, $Y_{SNI}$ pointe vers la droite et $Z_{SNI}$ pointe vers le bas. La centrale de navigation 11 permet à chaque instant de déterminer la position et l'orientation du repère SNI par rapport à un repère géographique, ou repère global, par exemple le repère ecef (Earth centered, Earth fixed) défini par un centre géographique $O_{ECEF}$ et trois axes géographiques $X_{ECEF}$, $Y_{ECEF}$ et $Z_{ECEF}$. Le centre du repère ecef est le centre de la terre. Les axes $X_{ECEF}$ et $Y_{ECEF}$ sont dans le plan équatorial, $X_{ECEF}$ pointe dans la direction du méridien de Greenwich et $Y_{ECEF}$ pointe vers 90deg. Est. Enfin $Z_{ECEF}$ pointe vers le pôle. Le repère ecef est un repère global, son centre est fixe.

Un repère 22 propre au dispositif de pointage, appelé ici repère lidar est défini par un centre $O_{lidar}$ et trois axes $X_{lidar}$, $Y_{lidar}$ et $Z_{lidar}$. Le LiDAR considéré ici est un LiDAR 2D. Par convention, l'axe $Y_{lidar}$ est l'axe de rotation 16 du miroir 15 et pointe vers l'interface du LiDAR que l'on considère comme étant l'avant du LiDAR. Ainsi, le LiDAR balaie le plan ($X_{lidar}$, $Z_{lidar}$) où $X_{lidar}$ pointe vers la droite du LiDAR et $Z_{lidar}$ pointe vers le haut. Le plan ($X_{lidar}$, $Z_{lidar}$) est aussi repéré plan de balayage 27 de la direction de pointage 17 du faisceau laser.

La figure 2 représente schématiquement le repère SNI 21 et le repère lidar 22 du système de la figure 1, par rapport au repère géographique 20. La distance entre le centre $O_{SNI}$ du repère SNI et le centre $O_{lidar}$ du repère lidar est communément appelée bras de levier. Par construction, dans le présent document, l'axe $X_{SNI}$ du repère 21 du SNI est pratiquement parallèle à l'axe $Y_{lidar}$ du repère 22 du lidar, l'axe $Y_{SNI}$ du repère 21 du SNI est pratiquement parallèle à l'axe $X_{lidar}$ du repère 22 du lidar et l'axe $Z_{SNI}$ du repère 21 du SNI est pratiquement parallèle et opposé à l'axe $Z_{lidar}$ du repère 22 du lidar. Dans le présent document, on entend par pratiquement parallèles, alignés à $\pm$ 5 deg., voire à mieux que 1 degré.

On définit une matrice de rotation comprenant trois angles d'Euler pour passer du repère SNI au repère lidar. Par construction, on connaît en général ces angles de rotation à mieux que quelques degrés, voire à quelques dixièmes de degrés près.

Toutefois, étant donné que le lidar mesure des distances allant de quelques mètres à plusieurs centaines de mètres, une erreur sur l'orientation angulaire de la direction de pointage peut se traduire par une erreur de positionnement, qui n'est pas une erreur de biais constante, mais une erreur variable selon la distance de la cible.

Il est donc nécessaire de définir une méthode de calibration pour déterminer les angles de désalignement entre le repère SNI et le repère lidar. On appelle angles de désalignement (boresight error), les angles correspondant aux erreurs angulaires entre le repère estimé du SNI et le repère 21 attaché au SNI.

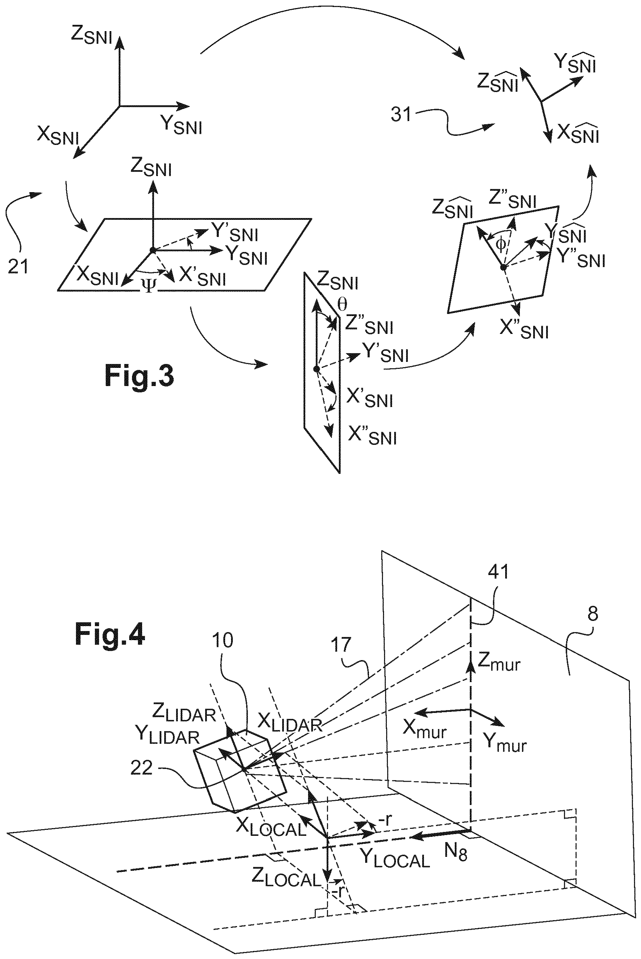

La figure 3 représente schématiquement le changement de repère pour passer du repère 21 propre au *SNI* à un repère estimé 31.

La figure 3 illustre les trois angles d'Euler de désalignement ($\Phi$, $\theta$, $\Psi$) que l'on cherche à calibrer. L'angle de désalignement $\Psi$ représente un angle de rotation autour de l'axe $Z_{SNI}$ pour passer du repère ($X_{SNI}$, $Y_{SNI}$) à un repère ($X'_{SNI}$, $Y'_{SNI}$). L'angle de désalignement $\theta$ représente un angle de rotation autour de l'axe $Y'_{SNI}$ pour passer du repère ($X'_{SNI}$, $Z_{SNI}$) à un repère ($X''_{SNI}$, $Z''_{SNI}$), l'axe $Y'_{SNI}$ étant confondu avec l'axe $Y''_{SNI}$. L'angle de désalignement $\Phi$ représente un angle de rotation autour de l'axe $X''_{SNI}$ pour passer du repère ($Y''_{SNI}$, $Z''_{SNI}$) au repère estimé 31.

Lors de l'installation du système lidar, on connaît l'orientation relative des deux dispositifs à quelques degrés près. Cette orientation relative est exprimée par la matrice de changement de repère $C_{LiDAR}^{S\hat{N}I}$.

L'objet de la calibration des angles de désalignement est de déterminer précisément les trois angles d'Euler de désalignement ($\Phi$, $\theta$, $\Psi$) représentés sur la figure 3.

Ce problème de calibration des angles de désalignement a déjà été abordé en particulier dans des applications de lidar aérien (airborne lidar) dans lesquelles un système lidar est embarqué sur un aéronef de manière à scanner ou balayer la surface du sol et des toits des immeubles pendant un déplacement de l'aéronef. Dans ces applications de lidar aérien, l'erreur sur les angles de désalignement est particulièrement critique. En effet, les lidars aériens balayent des distances de plusieurs centaines de mètres. Or plus la distance de pointage est grande, plus l'erreur sur la position des points mesurés par le système lidar est importante, donc facilement observable.

La publication K. Kris Morin, Naser El-Sheimy, 2002, "Post-mission adjustment methods of airborne laser scanning data" In FIG XXII International Congress, Washington, DC USA présente l'impact des erreurs d'angle de désalignement sur le positionnement des points mesurés par un lidar aérien puis expose différentes méthodes de calibration. On distingue deux catégories de méthodes de calibration : d'une part les méthodes dirigées par les données (Data driven), d'autre part les méthodes dirigées par le système (System driven).

Une première méthode de calibration dirigée par les données consiste à ajuster manuellement différents acquisitions de lignes ou d'images par balayage du faisceau laser jusqu'à ce que le résultat soit satisfaisant visuellement. Cette méthode n'est absolument pas rigoureuse mathématiquement et ne fournit pas de mesure statistique sur la qualité de la calibration.

Une autre méthode de calibration dirigée par les données est décrite dans la publication Chao Gao, Spletzer, J.R., "On-line calibration of multiple lidars on a mobile vehicle platform", Robotics and Automation (ICRA), 2010 IEEE International Conference, vol., no., pp.279, 284, 3-7 May 2010. Selon cette publication, des points remarquables, tels que des lignes ou des contours, sont identifiés dans différents images produites par balayage (ou scan) d'une même zone. Ces points remarquables sont ensuite utilisés afin de calculer la matrice de rotation R et le vecteur translation T minimisant l'écart entre ces points $\hat{\mathbf{X}}_{\text{LiDAR}}^{\text{ecef}}$. Après correction, on obtient les points $\mathbf{X}_{\text{LiDAR}}^{\text{ecef}}$ :

$$\mathbf{X}_{\text{LiDAR}}^{\text{ecef}} = R.\hat{\mathbf{X}}_{\text{LiDAR}}^{\text{ecef}} + \mathbf{T}$$

Les méthodes dirigées par les données ne reposent sur aucun modèle et ne nécessitent pas de récupérer les données position du GPS du véhicule sur lequel est embarqué le système ou d'attitude du SNI mais seulement les points lidar. D'un premier abord simples, ces méthodes ne le sont en réalité pas tant que ça.

En effet, la sélection de points remarquables n'est pas triviale car même avec une acquisition à haute densité de points, il est difficile de sélectionner précisément les mêmes points sur plusieurs scans, d'autant plus que ces points sont bruités. Cette sélection de points n'est pas automatique, elle prend beaucoup de temps et le résultat de la calibration dépend grandement de l'utilisateur.

Par ailleurs, les méthodes dirigées par les données ne se basant pas sur un modèle d'erreur rigoureux, elles ne fournissent pas d'outils de mesure statistiques permettant de juger de la qualité de l'ajustement.

Les méthodes de calibration dirigées par le système reposent sur un modèle d'erreur, tel que présenté par exemple dans les publications Skaloud, J., Litchi, D., 2006, "Rigorous approach to boresight self-calibration in airborne laser scanning", ISPRS Journal of Photogrammetry & remote Sensing 61, 47-59 et Skaloud, J., Schaer, P., "Towards automated lidar boresight self-calibration", in Proc. 5th International Symposium on Mobile Mapping Technology, Padua, Italy, 6 p, May 2007. Ce modèle d'erreur permet d'identifier des erreurs systématiques, dont en particulier l'erreur de désalignement entre le lidar et la centrale de navigation. Ainsi, une même opération de sélection de points remarquables que précédemment est effectuée mais l'estimation des angles de désalignement passe par l'utilisation d'un modèle d'erreur.

On utilise ensuite un modèle d'erreur du type :

$$\mathbf{X}_{\text{LiDAR}}^{\text{ecef}} = \mathbf{X}_{\text{SP}}^{\text{ecef}} + C_n^{ecef} C_{SNI}^n \left( \mathbf{b} + \left( C_{S\hat{N}I}^{SNI} C_{LiDAR}^{S\hat{N}I} \right) \mathbf{X}_{\text{LiDAR}}^{\text{LiDAR}} \right)$$

où ecef (earth centered earth fixed) désigne un répère géocentré et géostationnaire,

$C_A^B$ : représente de manière générale une matrice de passage d'un repère A à un repère B ;

$\mathbf{X}_\alpha^\beta$ : représente de manière générale une position d'un dispositif $\alpha$ dans le repère $\beta$

b : représente le bras de levier entre le lidar et le système de positionnement.

Le modèle d'erreur peut aussi prendre en compte d'autres paramètres d'erreurs tels que les erreurs de bras de levier, le biais sur les angles du SNI, le biais sur la mesure de distance par le lidar...

Toutefois, ces méthodes de calibration nécessitent l'intervention d'un utilisateur pour sélectionner des points remarquables dans les différents scans.

La publication Skaloud, J., Schaer, P., "Towards automated lidar boresight self-calibration", in Proc. 5th International Symposium on Mobile Mapping Technology, Padua, Italy, 6 p, May 2007 propose d'automatiser la procédure de calibration d'un système lidar aérien, en sélectionnant un ensemble de points appartenant à une même surface, par exemple de toiture, au lieu de comparer des points remarquables deux à deux.

Cette approche permet l'automatisation de l'algorithme de calibration. Il est en effet plus facile de mettre en place des traitements de détection/extraction automatique de plans et d'identification de plans communs entre différents scans. Cette méthode donne des résultats satisfaisants en lidar aérien car la distance aux cibles est importante et rend donc l'erreur facilement observable.

Dans les systèmes dits de lidar terrestre, un système lidar est embarqué sur un véhicule terrestre, par exemple sur le toit d'une voiture, et le faisceau laser balaye les façades des immeubles au cours de déplacements du véhicule le long d'une rue par exemple.

Les méthodes classiques de calibration de système de navigation et pointage en lidar terrestre s'inspirent très largement l'approche de calibration lidar aérien qui semble donner de bons résultats.

Ainsi, la publication Rieger, P., Studnicka, N., Pfennigbauer, M., Zach, G., "Boresight alignment method for mobile laser scanning systems", Journal of Applied Geodesy. Volume 4, Issue 1, Pages 13-21 décrit la calibration d'un système lidar terrestre en scannant un plan de manière dynamique, lors d'un déplacement du système dans un sens puis dans l'autre et en faisant varier l'angle de cap du lidar suivant quatre positions. Cette calibration nécessite au minimum 8 scans au total, chaque orientation devant être répétée au moins deux fois.

La procédure se déroulant en dynamique, les points doivent être exprimés dans un repère global (ex : ECEF). Une fois les points exprimés dans le repère global, un algorithme détecte les plans communs formés par les points lidar entre les différents scans et estime les angles de désalignement en ajustant ces plans des différents scans les uns par rapport aux autres.

Toutefois, les performances de cette calibration de lidar terrestre sont moindres qu'en lidar aérien. Premièrement, les distances de pointage sont beaucoup plus faibles (de l'ordre de 10m) rendant l'erreur sur la position des points lidar beaucoup moins facilement observable. De plus, il n'est pas facile de faire varier la distance de pointage de manière suffisamment importante pour mettre en évidence l'erreur de désalignement. Ensuite, la procédure de calibration étant effectuée de manière dynamique, il est nécessaire d'utiliser un système de positionnement fournissant la position du véhicule en temps réel. Or, au cours des déplacements terrestres, le signal du GPS peut être masqué ou affecté par des trajets multiples, ce qui est moins fréquent dans le cas aérien. D'autre part, en lidar terrestre, la diversité des orientations des plans est moindre : on trouve surtout des plans horizontaux et verticaux alors qu'en lidar aérien les toits des immeubles offrent généralement une gamme d'orientations très variées permettant de diminuer la corrélation entre les différents angles de désalignement. Enfin, cette méthode se révèle sensible au biais sur les angles donnés par la centrale de navigation, si bien que les valeurs des angles de désalignement découlant de cette calibration sont en général biaisées.

En résumé, les méthodes de calibration des angles de désalignement sont sensibles à différentes sources d'erreurs : les erreurs humaines, lors du choix des points remarquables, les erreurs de GPS, lors du déplacement du système au cours de la calibration, et les erreurs de biais du SNI. De plus, ces méthodes de calibration sont chronophages.

Il existe donc un besoin d'une méthode de calibration des angles de désalignement à la fois facile et rapide à mettre en oeuvre et de préférence automatique. Un autre but de l'invention est de fournir une méthode de calibration qui soit immune aux erreurs GPS. Un autre but de l'invention est de fournir une méthode de calibration qui soit robuste aux bras de levier. Encore un autre but de l'invention est de fournir une méthode de calibration qui soit insensible aux biais du SNI afin de déterminer des angles de désalignement non biaisés.

La présente invention a pour but de remédier aux inconvénients des méthodes et dispositifs antérieurs.

L'invention concerne en particulier un procédé de calibration d'un système de navigation et de pointage comprenant une centrale de navigation reliée solidairement à un dispositif de pointage, la centrale de navigation étant configurée pour mesurer la position et l'orientation d'un repère de ladite centrale de navigation, le dispositif de pointage comprenant des moyens d'émission d'un faisceau dans une direction de pointage et des moyens de balayage de la direction de pointage, le dispositif de pointage étant configuré pour mesurer un signal de pointage, de préférence par réflexion ou rétro-diffusion dudit faisceau sur une cible, en fonction de la direction de pointage dans un repère lié au dispositif de pointage, le procédé de calibration comprenant les étapes suivantes de calibration des angles entre le repère de ladite centrale de navigation et le repère lié au dispositif de pointage :

> a. Estimation d'un repère approché de navigation, le repère approché de navigation étant incliné par rapport au repère de navigation avec des angles d'Euler de désalignement ($\Phi$, $\theta$, $\Psi$) ;
> b. Sélection d'une première surface plane, de préférence verticale ;
> c. Détermination d'un vecteur normal à ladite première surface plane dans le repère de navigation ;
> d. Orientation du système de navigation et de pointage dans une pluralité d'orientations angulaires distinctes par rapport à la première surface plane, ladite pluralité d'orientations angulaires étant déterminées dans le repère de la centrale de navigation ;
> e. Balayage de la direction de pointage de manière à acquérir, au moyen du dispositif de pointage, pour chacune des orientations de ladite pluralité d'orientations par rapport à la première surface plane, une série de mesures de pointage suivant une ligne de balayage sur la première surface plane ;

f. Traitement de chacune desdites séries de mesures de pointage suivant une ligne de balayage sur la première surface plane de manière à déterminer, dans le repère lié au dispositif de pointage, un vecteur directeur approché de chaque ligne de balayage sur la première surface plane ;

g. Traitement d'une pluralité de vecteurs directeurs approchés d'une pluralité de lignes de balayage sur la première surface plane pour en déduire un vecteur normal approché de la première surface plane ;

h. Calcul d'au moins un angle de désalignement ($\Phi$, $\theta$, $\Psi$) entre le vecteur normal approché déterminé à l'étape précédente dans le repère de navigation approché et le vecteur normal déterminé à l'étape c) dans le repère de la centrale de navigation.

Selon un mode de réalisation préféré, le procédé de calibration comporte en outre les étapes suivantes :

i. Sélection d'une deuxième surface plane, de préférence horizontale ;

j. Détermination d'un vecteur normal à ladite deuxième surface plane dans le repère de navigation ;

k. Orientation du système de navigation et de pointage dans une pluralité d'orientations angulaires distinctes par rapport à la deuxième surface plane, ladite pluralité d'orientations angulaires étant déterminées dans le repère de la centrale de navigation ;

l. Balayage de la direction de pointage de manière à acquérir, au moyen du dispositif de pointage, pour chacune des orientations de ladite pluralité d'orientations par rapport à la deuxième surface plane, une série de mesures de pointage suivant une ligne de balayage sur la deuxième surface plane ;

m. Traitement de chacune desdites séries de mesures de pointage suivant une ligne de balayage sur la deuxième surface plane de manière à déterminer, dans le repère lié au dispositif de pointage, un vecteur directeur approché de chaque ligne de balayage sur la deuxième surface plane ;

n. Traitement d'une pluralité de vecteurs directeurs approchés d'une pluralité de lignes de balayage sur la deuxième surface plane pour en déduire un vecteur normal approché de la deuxième surface plane ;

o. Calcul d'au moins un autre angle de désalignement ($\Phi$, $\theta$, $\Psi$) entre le vecteur normal approché déterminé à l'étape précédente dans le repère de navigation approché et le vecteur normal déterminé à l'étape j) dans le repère de la centrale de navigation.

Selon un aspect particulier du procédé de l'invention, ladite pluralité d'orientations angulaires comporte les quatre orientations angulaires du système de navigation et de pointage par rapport à la première surface plane suivantes, où r désigne l'angle de roulis, t l'angle de tangage et c l'angle de cap du système de navigation et de pointage par rapport à un repère local tel que les axes X et Y de ce repère local soient dans le plan horizontal, et l'axe X soit parallèle au plan la première surface plane :

- Orientation 1 : (r, t, c) = (0, 0, 0 $\pm$ 5 deg.)
- Orientation 2 : (r, t, c) = (0, 0, 180 $\pm$ 5 deg.)
- Orientation 3 : (r, t, c) = (0, 0, 55 $\pm$ 25 deg.)
- Orientation 4 : (r, t, c) = (0, 0, -55 $\pm$ 25 deg.)

et/ou les deux orientations angulaires suivantes du système de navigation et de pointage par rapport à la deuxième surface plane :

Orientation 5 : (r, t, c) = (0, 55 $\pm$ 25 deg., 0)
Orientation 6 : (r, t, c) = (0, -55 $\pm$ 25 deg., 0)

Selon un aspect particulier du procédé de l'invention :

- l'étape e) et/ou l'étape l) comporte une pluralité de balayage d'une même ligne de balayage et en ce que ladite série de mesures de pointage suivant une ligne de balayage est obtenue par un calcul de moyenne de la pluralité de balayage d'une même ligne de scan ;
- l'étape g) et/ou l'étape n) de détermination d'un vecteur normal approché comporte une étape de détermination d'un vecteur propre associé à la plus petite valeur propre d'une analyse en composantes principales des séries de mesures de pointage suivant ladite pluralité de lignes de balayage ou une étape de calcul d'une moyenne d'une pluralité de vecteurs normaux mesurés par produit vectoriel des vecteurs directeurs approchés de deux lignes de scan différentes déterminés à l'étape f) et/ou à l'étape m).

Selon un mode de réalisation particulier, l'étape h) et/ou l'étape o) de calcul des angles de désalignement (Φ, θ, Ψ) comporte une étape de maximisation d'un produit scalaire pour en déduire une estimation d'un angle de désalignement, ladite étape de maximisation comportant une étape de traitement par une méthode de régression des moindres carrés non linéaires ou par une méthode de régression des moindres carrés linéaires ou une méthode de Quasi-Newton.

Selon un mode de réalisation particulier et avantageux, le procédé de calibration comporte une étape de calcul d'un indicateur de précision des angles de désalignement (Φ, θ, Ψ).

L'invention concerne aussi un système de navigation et de pointage comprenant une centrale de navigation reliée solidairement à un dispositif de pointage, la centrale de navigation étant configurée pour mesurer la position et l'orientation d'un repère de ladite centrale de navigation, le dispositif de pointage comprenant des moyens d'émission d'un faisceau dans une direction de pointage et des moyens de balayage de la direction de pointage, le dispositif de pointage étant configuré pour mesurer un signal de pointage, de préférence par réflexion ou rétrodiffusion dudit faisceau sur une cible, en fonction de la direction de pointage dans un repère lié au dispositif de pointage, le système de navigation comprenant des moyens de traitement des mesures de position et d'orientation de la centrale de navigation et des moyens de traitement du signal de pointage, et des moyens de calibration adaptés pour implémenter une calibration angulaire entre le repère de ladite centrale de navigation et le repère de pointage suivant un procédé de calibration selon l'un des modes de réalisation décrits.

Selon des aspects particuliers et avantageux du système de navigation et de pointage :

- ladite centrale de navigation comporte un système d'orientation parmi une centrale de navigation inertielle ou une centrale d'attitude de type AHRS et/ou un système de positionnement de type GPS ;
- le dispositif de pointage comporte un lidar à balayage suivant un plan en deux dimensions, un lidar à balayage en trois dimensions ou un sonar ;

De façon avantageuse, le système de navigation et de pointage comporte en outre des moyens d'orientations angulaire dudit système de navigation et de pointage, adaptés pour orienter ledit système de navigation et de pointage dans une pluralité d'orientations angulaires distinctes par rapport à ladite première surface plane et/ou, respectivement, à ladite deuxième surface plane.

L'invention trouvera une application particulièrement avantageuse dans les systèmes de navigation et de pointage comprenant une centrale inertielle et un lidar.

L'invention s'applique aussi à d'autres systèmes intégrant à la fois un système de positionnement, un système d'orientation et un système de visée, et en particulier un système de visée tel qu'un sonar basé sur l'émission et la réception de signaux acoustiques.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :

- la figure 1 représente un système lidar à balayage en 2D ;
- la figure 2 représente respectivement les repères du SNI et du lidar dans un système lidar ;
- la figure 3 représente schématiquement les trois angles d'Euler d'erreur d'alignement que l'on cherche à calibrer pour passer du repère SNI (le vrai repère du dispositif SNI) à un repère $S\hat{N}I$ (repère approximé) ;
- la figure 4 illustre l'angle de roulis r d'un système lidar dans une première orientation de calibration face à un mur de référence ;
- la figure 5 illustre l'angle de tangage t d'un système lidar dans une deuxième orientation de calibration face à un mur de référence ;
- la figure 6 illustre l'angle de cap c d'un système lidar dans une autre orientation face à un mur de référence ;
- la figure 7 illustre l'orientation d'un système lidar dans une orientation de calibration par rapport à un sol de référence ;
- la figure 8 illustre l'orientation d'un système lidar dans une autre orientation de calibration par rapport à un sol de référence ;
- la figure 9 est une vue de dessus pour illustrer l'orientation d'un système lidar pour la calibration par rapport à un mur de référence ;
- la figure 10 est une vue de côté pour illustrer l'orientation d'un système lidar pour la calibration par rapport à un sol de référence.

Dans la description du mode de réalisation qui va suivre, on considère la calibration d'un système lidar comprenant un lidar 2D. Néanmoins, l'invention n'est nullement limitée à ce mode de réalisation. L'homme du métier transposera aisément la méthode décrite à un système lidar à 3D, en limitant le balayage à 2D.

On considère un système lidar 10 placé à une position fixe dans un repère géographique. Le système lidar 10 est monté solidairement comme illustré par exemple sur la figure 2.

Avant de débuter l'acquisition des données, la centrale de navigation 11 doit être alignée selon les instructions du constructeur, afin de déterminer précisément l'orientation angulaire du repère 21 (SNI) de la centrale de navigation 11 par rapport à un repère géographique de référence 20, par exemple le repère *ecef (earth centered earth fixed)*.

Le procédé de calibration comprend l'orientation angulaire du système lidar dans une pluralité d'orientations par rapport à une surface plane de référence, le système lidar pouvant rester statique, c'est à dire à une même position de l'espace par rapport au repère géographique, car la position du système n'a aucun impact sur la calibration, seule l'orientation angulaire du système lidar par rapport à la surface plane de référence (*e.g.* un mur comme expliqué dans la suite) compte. On précise bien qu'il s'agit ici de l'orientation du système lidar, le SNI étant solidaire du lidar. Les différentes orientations du système lidar sont décrites de manière détaillée ci-dessous.

Le procédé de calibration comprend l'acquisition de mesures lidar suivant une ligne de scan ou ligne de balayage, pour chacune des orientations du système lidar par rapport à la surface plane de référence.

Le procédé de calibration comprend ensuite le traitement des différents scans acquis pour les différentes des orientations du système lidar par rapport à la surface plane de référence, pour en extraire une mesure d'un ou de plusieurs angles d'Euler de désalignement.

On définit l'orientation du système lidar 10 par rapport à une première surface plane de référence à l'aide de trois angles d'Euler : (r, t, c). Ces angles sont respectivement les angles de roulis, tangage et cap du SNI définis par rapport à un repère local au site de calibration.

Plus précisément, à titre d'exemple illustratif, on choisit comme première surface plane de référence un mur 8 supposé plan et vertical dans le repère géographique.

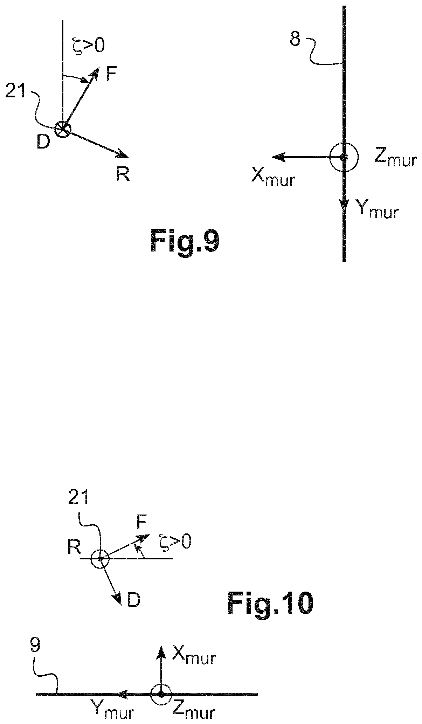

On a représenté sur les figures 4-8 le repère du lidar ($X_{lidar}$, $Y_{lidar}$, $Z_{lidar}$). Dans la suite de l'exposé, l'axe de rotation de balayage du faisceau laser est supposé être l'axe $Y_{lidar}$. On a aussi représenté sur les figures 4-6 un repère ($X_{mur}$, $Y_{mur}$, $Z_{mur}$) lié au mur. Le repère mur est propre à chaque scan car il dépend de l'orientation du scan. L'axe $X_{mur}$ correspond à la normale du mur, les axes $Y_{mur}$ et $Z_{mur}$ sont donc dans le plan du mur avec $Z_{mur}$ colinéaire à la direction du scan (voir figure 4-6). Le repère mur s'applique aux scans de n'importe quelle surface plane, que ce soit un mur vertical (Figures 4-6 et 8) ou un sol horizontal (figure 9).

On a représenté sur les figures 4-6 un repère local au site de calibration. Ce repère local est défini pour des raisons pratiques afin d'expliquer clairement les angles utilisés pour la procédure de calibration. Le repère local est seulement utilisé pour exprimer des orientations, l'emplacement de son origine n'a pas d'importance, seule la direction de ses trois axes importe. Ce repère local correspond à un repère de navigation à une rotation près autour de Z. Ainsi $X_{local}$ et $Y_{local}$ sont dans le plan tangent local avec $Y_{local}$ pointant vers le mur et $X_{local}$ vers la gauche du mur. $Z_{local}$ est confondu avec la verticale locale et pointe vers le bas.

La figure 4 illustre schématiquement l'angle de roulis r du système lidar par rapport à un mur 8 plan et vertical. La direction de pointage 17 du faisceau laser du lidar est représentée schématiquement par plusieurs lignes trait-tiret correspondant à différentes orientations angulaires du miroir 5 autour de l'axe $Y_{lidar}$ pour produire un balayage du faisceau laser. Par projection sur le mur 8, le faisceau laser suit une ligne de scan ou ligne de balayage 41. Lorsque le lidar présente une orientation telle qu'illustrée sur la figure 4, avec uniquement un angle de roulis r non nul par rapport à une verticale locale (par exemple, une droite perpendiculaire au sol), les angles de tangage t et de cap c étant nuls, la ligne de scan 41 est une ligne verticale qui est située dans le plan du mur 8. Dans ce cas, l'angle de cap c étant nul, le plan d'incidence du faisceau laser, formé par les directions de pointage 17, est normal au plan du mur 8.

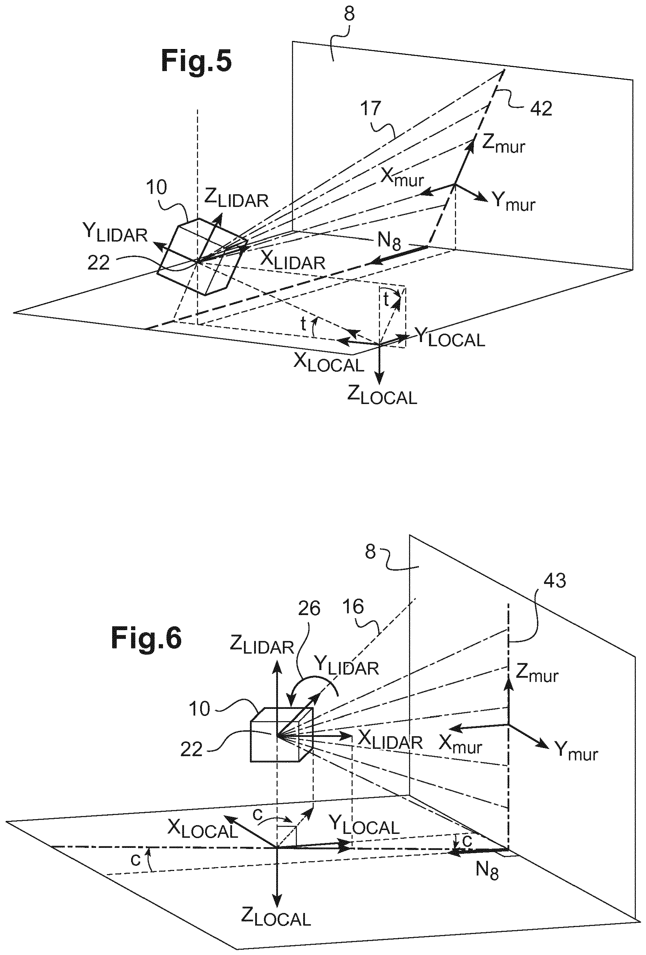

La figure 5 illustre schématiquement l'angle de tangage t du système lidar par rapport au mur 8 plan et vertical. De manière analogue à la figure 4, la direction de pointage 17 du faisceau laser du lidar est représentée schématiquement par plusieurs lignes trait-tiret correspondant à différentes orientations angulaires du miroir 5 autour de l'axe $Y_{lidar}$ pour produire un balayage du faisceau laser. Par projection sur le mur 8, le faisceau laser suit une ligne de scan ou ligne de balayage 42. Lorsque le lidar présente une orientation telle qu'illustrée sur la figure 5, avec uniquement un angle de tangage t non nul, les angles de roulis r et de cap c étant nuls, la ligne de scan 42 est une ligne qui est située dans le plan vertical du mur 8 mais qui est inclinée de l'angle t par rapport à la verticale. Dans ce cas, l'angle de cap c étant nul, le plan d'incidence du faisceau laser, formé par les directions de pointage 17, est normal au plan du mur vertical 8.

La figure 6 illustre schématiquement l'angle de cap c d'un système lidar par rapport au mur 8 plan et vertical. De manière analogue aux figures 4-5, la direction de pointage 17 du faisceau laser du lidar est représentée schématiquement par une ligne trait-tiret correspondant à différentes orientations angulaires du miroir 5 autour de l'axe $Y_{lidar}$ pour produire un balayage du faisceau laser. Par projection sur le mur 8, le faisceau laser suit une ligne de scan ou ligne de balayage 43. Lorsque le lidar présente une orientation telle qu'illustrée sur la figure 6, avec uniquement un angle de cap c non nul, les angles de roulis r et de tangage t étant nuls, la ligne de scan 43 est une ligne verticale qui est située dans le plan du mur 8. Dans ce cas, le plan d'incidence du faisceau laser, formé par les directions de pointage 17, est incliné de l'angle c par rapport à la normale $N_8$ au plan du mur vertical 8.

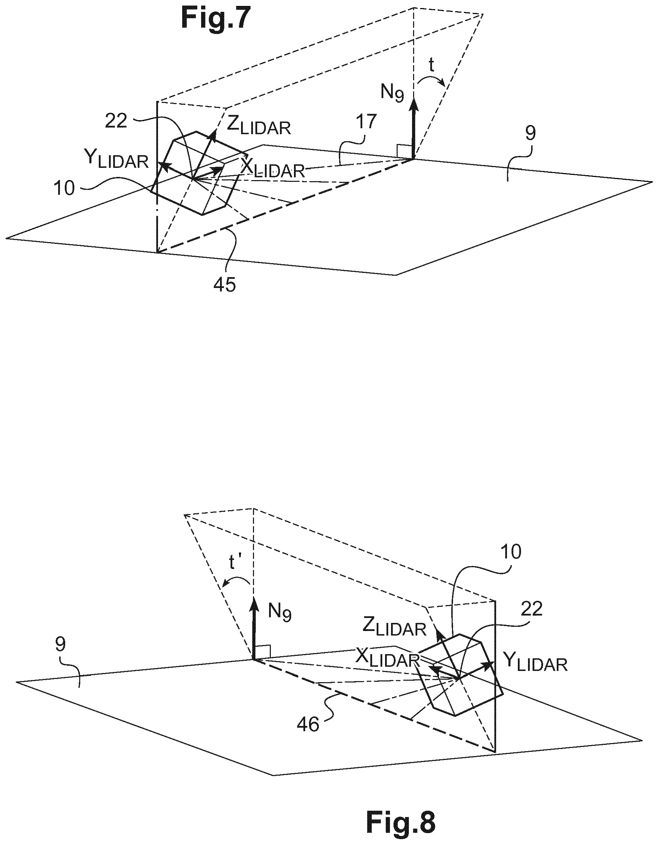

La figure 7 illustre schématiquement l'angle de tangage t du système lidar lors d'un scan sur un plan horizontal 9. La direction de pointage 17 du faisceau laser du lidar est représentée schématiquement par une ligne trait-tiret correspondant à différentes orientations angulaires du miroir 5 autour de l'axe $Y_{lidar}$ pour produire un balayage du faisceau laser. Par projection sur le sol 9, le faisceau laser suit une ligne de scan ou ligne de balayage 45. Lorsque le lidar présente une orientation telle qu'illustrée sur la figure 7, avec uniquement un angle de tangage t non nul, les angles de roulis r et de cap c étant nuls, la ligne de scan 45 est une ligne qui est située dans le plan horizontal du sol 9 et qui est donc horizontale. Dans ce cas, le plan d'incidence du faisceau laser, formé par les directions de pointage 17, est incliné de l'angle $(\pi/2-t)$ par rapport à la normale au plan du sol horizontal 9.

De manière analogue, la figure 8 illustre schématiquement un autre angle de tangage t' du système lidar lors d'un scan sur le plan horizontal 9. Par projection sur le sol 9, le faisceau laser suit une ligne de scan ou ligne de balayage 46. Lorsque le lidar présente une orientation telle qu'illustrée sur la figure 7, avec uniquement un angle de tangage t' non nul, les angles de roulis r et de cap c étant nuls, la ligne de scan 46 est une ligne qui est située dans le plan horizontal du sol 9 et qui est donc horizontale. Dans ce cas, le plan d'incidence du faisceau laser, formé par les directions de pointage 17, est incliné de l'angle $(\pi/2-t')$ par rapport à la normale au plan du sol horizontal.

Le procédé de l'invention exploite les différentes orientations angulaires du système lidar représentées sur les figures 4 à 8, la position du système Lidar étant par ailleurs statique, pour en déduire une mesure précise des angles entre le repère 22 du lidar et le repère 21 du SNI ou plus précisément une mesure précise des angles de désalignement entre le repère estimé 31 du SNI et le repère réel 21 du SNI.

Dans un exemple simple de réalisation, le procédé comprend les étapes suivantes :

- sélectionner une première surface plane de préférence verticale, par exemple un mur de référence ;
- acquérir des mesures au moyen du système lidar en orientant la direction de pointage vers le mur de référence selon une série d'orientations du système lidar prédéterminée ;
- appliquer un algorithme de traitement des mesures acquises à l'étape précédente pour en extraire des valeurs de deux angles de désalignement.

Avantageusement, le procédé est complété par les étapes suivantes :

- sélectionner une deuxième surface plane de préférence hrizontale, par exemple un sol de référence ;
- acquérir des mesures au moyen du système lidar- SNI en orientant la direction de pointage vers le sol de référence selon une série d'orientations du système lidar prédéterminée ;
- appliquer un algorithme de traitement des mesures acquises à l'étape précédente pour en extraire des valeurs d'un troisième angle de désalignement.

Plus précisément, dans un mode de réalisation particulier, le procédé comporte une première étape et une deuxième étape principales.

La première étape consiste à acquérir plusieurs lignes de scan successives, de telle manière que le lidar soit orienté par rapport à un mur vertical 8 selon les orientations définies par les angles suivants dans un repère local fixe défini par rapport au mur, où les axes $X_{local}$ et $Y_{local}$ sont dans le plan du sol, l'axe $X_{local}$ étant parallèle au mur, l'axe $Y_{local}$ perpendiculaire au mur et l'axe $Z_{local}$ perpendiculaire au sol :

- Orientation 1 : (r, t, c) = (0, 0, 0)
- Orientation 2 : (r, t, c) = (0, 0, 180 deg.)
- Orientation 3 : (r, t, c) = (0, 0, 70 deg.)
- Orientation 4 : (r, t, c) = (0, 0, -70 deg.)

Le passage de l'orientation 1 à l'orientation 2 consiste par exemple à utiliser un miroir 15 double face, à faces planes et parallèles et à appliquer un demi-tour au système lidar.

La deuxième étape consiste à scanner un plan horizontal 9, typiquement le sol, en penchant le système lidar dans le plan formé par les vecteurs $Y_{lidar}$ et $Z_{lidar}$ selon les orientations définies par les angles suivants :

Orientation 5 : (r, t, c) = (0, 70 deg., 0)
Orientation 6 : (r, t, c) = (0, -70 deg., 0).

Dans chacune des orientations 1, 2, 3, 4, 5, 6 définies ci-dessus, le système lidar acquiert au moins une ligne de scan. Avantageusement, l'acquisition de deux scans ou plus par orientation permet de calculer un scan moyen pour chaque orientation. Pour chaque point d'une ligne de scan, le système lidar acquiert une mesure de position et d'orientation angulaire du SNI associée à une mesure de distance entre le lidar et, respectivement, le mur 8 ou le sol 9.

On observe que les orientations 1 et 2 n'ont pas besoin d'être précises. Une précision angulaire de $\pm$ 5 deg. environ est suffisante pour chacun des angles (r, t, c).

D'autre part, dans les orientations 3 à 6, il est conseillé d'avoir des angles de tangage t et de cap c supérieurs à 60 degrés en valeur absolue. Toutefois, on observe qu'une valeur absolue d'angle de tangage supérieure à 30 degrés pour les orientations 5 et 6 suffit pour la détermination des angles de désalignement détaillée ci-après.

On verra qu'un minimum de 9 observations est nécessaire pour estimer les angles de désalignement ($\Phi$, $\theta$, $\Psi$). Par conséquent, des mesures selon ces 6 orientations sont faites au moins deux fois.

Les mouvements pour orienter le système de navigation et de pointage SNI-lidar par rapport au mur (ou par rapport au sol) peuvent être effectués manuellement, par exemple en plaçant le système lidar dans une cage qu'il est possible d'incliner ou en plaçant le système lidar sur une table permettant des mouvements de rotations. Dans une alternative, les mouvements d'inclinaison ou de rotation sont motorisés. Eventuellement, on peut aussi embarquer le système lidar sur un véhicule (sur le toit d'une auto par exemple), auquel cas, le véhicule se déplace sur des plans inclinés pour faire les essais dans les différentes orientations du système lidar par rapport à un plan vertical et un plan horizontal.

Il n'est pas nécessaire d'utiliser un seul mur 8 de référence pour faire les acquisitions nécessaires à la calibration. Cependant, plus les acquisitions sont longues, plus les erreurs d'orientation de la centrale inertielle peuvent avoir un impact, du fait des dérives d'une centrale inertielle dans le temps. Si la centrale de navigation est éteinte puis rallumée, les biais de la centrale de navigation peuvent aussi affecter les résultats des mesures car les biais auront changé.

La série des orientations 1, 2, 3, 4, 5 et 6 définie ci-dessus n'est qu'un exemple illustratif et nullement limitatif. L'homme du métier détermine d'autres séries d'orientations également utiles pour déterminer les angles de désalignement. La sensibilité et la précision des mesures des trois angles de désalignement dépendent de la sélection des différentes orientations. A cet égard, un point important dans la sélection des différentes orientations est d'effectuer des inclinaisons selon les différents axes pour les différentes orientations choisies, de façon à être sensible aux différents angles de désalignement. Et plus les orientations sont différentes l'une de l'autre, autrement dit plus l'amplitude des mouvements est grande pour passer d'une orientation à une autre, et plus le résultat de la calibration sera précis.

## Algorithme de traitement des mesures

L'algorithme de traitement de mesures doit calculer les angles de désalignement entre le SNI et le LiDAR ($\Phi$, $\theta$, $\Psi$). Un algorithme supportant les non linéarités est conseillé car on ne dispose pas de relation linéaire liant les observations aux angles de désalignement.

## Equation d'observation

Il faut d'abord définir l'équation d'observation. Pour chaque scan statique d'un plan, on dispose d'un ensemble de points formant une ligne de scan. Chacune de ces lignes, caractérisée par son vecteur directeur $\mathbf{u}_i^n$, appartient à ce même plan et donc vérifie l'équation :

$$f_i = \left( \mathbf{u_i}^n \right)^T . \mathbf{N}^n = 0$$

$$f_i = \left( C_{SNI}^n C_{S\hat{N}I}^{SNI} \left( \phi, \theta, \psi \right) C_{lidar}^{S\hat{N}I} \mathbf{u_i}^{lidar} \right)^T . \mathbf{N}^n$$

$\mathbf{N}^n$ : normale au plan 8 ou au plan 9 selon le plan auquel appartient $\mathbf{u}_i^{lidar}$ dans le repère *[n]*

$\mathbf{u}_i^{lidar}$ : direction de la ligne de scan i dans le repère *[lidar]*

$C_{lidar}^{S\hat{N}I}$ : Matrice de passage approximée du repère *[lidar]* au repère *[SNI]*

$C_{S\hat{N}I}^{SNI}$ : Matrice corrigeant le désalignement ($\Phi$, $\theta$, $\Psi$) entre le lidar et le SNI

$C_{SNI}^n$ : Matrice de passage du repère *[SNI]* au repère de *[n]*.

Comme mentionné précédemment, l'équation d'observation ne fait pas apparaitre d'information de position, ni de bras de levier, mais seulement des informations d'orientation. Elle est donc immune aux erreurs GPS. Par ailleurs, le fait de travailler dans le repère de navigation et non dans un repère global rend l'algorithme insensible aux biais du SNI car les erreurs de biais ne sont alors pas projetées lors du changement de repère.

Dans cette équation, les paramètres à estimer sont les angles de désalignement ($\Phi$, $\theta$, $\Psi$) et la normale $\mathbf{N}^n$ qui n'est a priori pas connue.

L'équation d'observation n'étant pas une fonction linéaire de ($\Phi$, $\theta$, $\Psi$), il est conseillé de choisir un algorithme adapté. Un algorithme de moindres carrés non linéaires est ici présenté.

**Mise en forme des données**

Les directions de ligne de scan ne sont pas directement fournies par le système LiDAR. Il faut les calculer.

*- **Pour chaque ligne de scan, calcul de la direction de la ligne de scan***

Pour chaque ligne de scan respectivement 41, 42, 43, 45, 46 acquise dans les différentes orientations 1 à 6 indiquées ci-dessus, on cherche à déterminer la direction respective de la ligne de scan 41, 42, 43, 45, 46.

Ce calcul peut se faire à l'aide de différentes méthodes, par exemple la détermination du vecteur propre associé à la plus grande valeur propre issue d'une analyse en composantes principales sur l'ensemble des points de chaque ligne de scan, ou par régression linéaire, etc.

On note $\mathbf{u}_i^{lidar}$ le vecteur directeur d'une ligne de scan **i** exprimé dans le repère du LiDAR, c'est-à-dire le vecteur directeur que l'on cherche et $\hat{\mathbf{u}}_i^{lidar}$ l'approximation qui en est faite, c'est-à-dire le résultat du calcul effectué à partir des mesures de position des points d'une ligne de scan.

A partir des quatre orientations 1, 2, 3 et 4 indiquées ci-dessus, on mesure donc quatre lignes de scan respectivement 41, 42, 43, 44. A partir des quatre lignes de scan 41, 42, 43, 44, on calcule donc quatre vecteurs directeurs approchés, respectivement $\hat{\mathbf{u}}_1^{lidar}$ $\hat{\mathbf{u}}_2^{lidar}$, $\hat{\mathbf{u}}_3^{lidar}$ et $\hat{\mathbf{u}}_4^{lidar}$ qui sont en principe tous dans le plan du mur vertical 8.

A partir des deux orientations 5 et 6 indiquées ci-dessus, on mesure deux lignes de scan respectivement 45 et 46. A partir des deux lignes de scan 45 et 46, on calcule deux vecteurs directeurs approchés, respectivement $\hat{\mathbf{u}}_5^{lidar}$ et $\hat{\mathbf{u}}_6^{lidar}$ qui sont en principe tous les deux dans le plan du sol horizontal 9.

Calcul des matrices de passage $C_{lidar}^{S\hat{N}I}$ et $C_{SNI}^{n}$ :

L'orientation relative entre le lidar et le SNI est connue approximativement à quelques degrés voir quelques dixièmes de degré. On utilise cette approximation pour calculer $C_{lidar}^{S\hat{N}I}$.

La matrice de passage du repère SNI au repère de navigation est calculée à partir des angles fournis par le SNI.

**Application de l'algorithme des Moindres Carrés Non Linéaires**

L'algorithme des moindres carrés non linéaires est un algorithme itératif. C'est-à-dire que le paramètre contenant le vecteur d'état contenant les paramètres à estimer est mis à jour suivant la formule :

$$\mathbf{X}_{k+1} = \mathbf{X}_k \, \Delta\mathbf{X}$$

Le vecteur d'état à l'itération (k) étant $\mathbf{X}_{(k)} = [\varphi_{(k)} \; \theta_{(k)} \; \psi_{(k)} \; \mathbf{N8}^n_{(k)} \; \mathbf{N9}^n_{(k)}]^T$

Avec $\Delta\mathbf{X} = (J_{(k)}^T J_{(k)})^{-1} J_{(k)}^T (-\mathbf{F}_{(k)})$

Où $\mathbf{F}_{(k)}$ est le vecteur contenant les N observations à l'itération (k) :

$$\mathbf{F}_{(k)} = \begin{bmatrix} f_{1(k)} \\ \vdots \\ f_{N(k)} \end{bmatrix}_{N \times 1}$$

Et $J_{(k)}$ est la jacobienne de $\mathbf{F}$ calculée en $\mathbf{X}_k$

L'algorithme s'arrête lorsque le critère de convergence est atteint, c'est-à-dire lorsque $\|\Delta\mathbf{X}\| < \varepsilon$, avec $\varepsilon$ un seuil prédéterminé.

Cet algorithme nécessite toutefois une initialisation du vecteur d'état. Les trois angles de désalignement ($\Phi$,

θ, Ψ) peuvent être initialisés sans problème à 0°. En revanche, des valeurs approximées des normales doivent être calculées.

Initialisation des normales :

A partir des différentes lignes de scan 41, 42, 43 ou respectivement 45, 46 relatives à un même plan le mur 8 ou respectivement le sol 9, on cherche à déterminer le vecteur normal à ce plan. Plus précisément, on calcule un vecteur normal approché relatif à chacun des deux plans, le mur 8 et le sol 9.

On note $\mathbf{N^n}$ le vecteur normal au plan, c'est-à-dire le vecteur directeur que l'on cherche et $\hat{\mathbf{N}}^\mathbf{n}$ l'approximation qui en est faite suite au cacul à partir des mesures des différentes lignes de scan.

Plus précisément, on a représenté sur les figures 4-6 la normale $N_8$ au mur vertical 8 et sur la figure 7 la normale $N_9$ au sol horizontal 9.

Le calcul du vecteur normal approché $\hat{\mathbf{N}}^\mathbf{n}$ d'un plan peut se faire à l'aide de différents algorithmes connus de l'homme du métier. Par exemple, on détermine le vecteur propre associé à la plus petite valeur propre de l'analyse en composantes principales de l'ensemble de tous les points de toutes les lignes de scan relatives à un même plan exprimés dans le repère de navigation, ou bien on calcule une moyenne de l'ensemble des vecteurs normaux mesurés par produit vectoriel des vecteurs directeurs approchés exprimés dans le repère de navigation calculés précédemment. En effet, si deux vecteurs directeurs $\hat{\mathbf{u}}_\mathbf{i}^n$ et $\hat{\mathbf{u}}_\mathbf{j}^n$ appartiennent à un même plan et sont non colinéaires, alors $\hat{\mathbf{u}}_\mathbf{i}^n \times \hat{\mathbf{u}}_\mathbf{j}^n = N^n$.

D'autres algorithmes à la disposition de l'homme du métier peuvent être utilisés pour estimer les angles de désalignement (Φ, θ, Ψ) tel que des méthodes basées sur des méthodes de Quasi-Newton.

**Description détaillée d'un mode de réalisation du procédé de calibration**

On cherche ici à déterminer des orientations favorables du système lidar lors de l'acquisition des différentes lignes de scan utilisées pour la calibration.

Pour un scan *i*, on note :

$$\hat{\mathbf{u}}_\mathbf{i}^{\,n} = \mathbf{u}_\mathbf{i}^{\,n} + \tilde{\mathbf{u}}_\mathbf{i}^{\,n}$$

Où:

- $\mathbf{u}_\mathbf{i}^n$ : représente le « vrai » vecteur directeur

- $\hat{\mathbf{u}}_\mathbf{i}^n$ : représente un vecteur directeur estimé

- $\tilde{\mathbf{u}}_\mathbf{i}^n$ : représente l'erreur sur le vecteur directeur, qui est en pratique majoritairement due aux angles de désalignement entre le repère approché du SNI et le repère propre au SNI, car les erreurs spécifiques du lidar peuvent être considérées à moyenne nulle.

Pour la calibration des angles de désalignement, on cherche à maximiser l'erreur $\langle \tilde{\mathbf{u}}_\mathbf{i}^n, \mathbf{N}^n \rangle$:

$$\left\langle \tilde{\mathbf{u}}_\mathbf{i}^{\,n}, \mathbf{N}^n \right\rangle = \left\langle \hat{\mathbf{u}}_\mathbf{i}^{\,n} - \mathbf{u}_\mathbf{i}^{\,n}, \mathbf{N}^n \right\rangle = \left\langle \hat{\mathbf{u}}_\mathbf{i}^{\,n}, \mathbf{N}^n \right\rangle$$

où l'opérateur $\langle .,. \rangle$ représente le produit scalaire des deux termes.

Cette erreur dépend donc de la normale au plan N et du vecteur directeur u, c'est-à-dire de l'orientation du lidar par rapport à ce plan. Le lidar 12 et la centrale de navigation 11 étant solidaires, on peut aussi dire que l'erreur dépend de l'orientation de la centrale de navigation 11 par rapport au plan.

Définissons alors un repère lié au mur 8 : ($X_{mur}$, $Y_{mur}$, $Z_{mur}$) et représenté sur les figures 4, 5, 6 et 9. L'axe Xmur correspond avec la normale $N_8$ du plan du mur et pointe dans la direction du lidar 12, l'axe Zmur est confondu avec le vecteur directeur u d'une ligne de scan et enfin l'axe Ymur est défini de manière à créer un repère orthonormé direct (Xmur, Ymur, Zmur). L'axe Xmur est donc fixe, tandis que les axes Ymur, Zmur dépendent de l'orientation du scan. Ainsi :

$$\mathbf{u}^{LiDAR} \leftrightarrow \begin{bmatrix} 0 \\ 0 \\ 1 \end{bmatrix}^{mur} \quad \text{et} \quad \mathbf{N}^{LiDAR} \leftrightarrow \begin{bmatrix} 1 \\ 0 \\ 0 \end{bmatrix}^{mur}$$

Définissons ensuite une matrice de passage du repère (Xmur, Ymur, Zmur) au repère approché [$S\hat{N}I$] de la centrale de navigation 11, la matrice de passage étant définie par trois angles d'Euler ($\alpha$, $\beta$, $\gamma$), telle que :

$$C_{mur}^{S\hat{N}I} = \begin{bmatrix} \cos(\beta)\cos(\gamma) & -\cos(\alpha)\sin(\gamma)+\sin(\alpha)\sin(\beta)\cos(\gamma) & \sin(\alpha)\sin(\gamma)+\cos(\alpha)\sin(\beta)\cos(\gamma) \\ \cos(\beta)\sin(\gamma) & \cos(\alpha)\cos(\gamma)+\sin(\alpha)\sin(\beta)\sin(\gamma) & -\sin(\alpha)\cos(\gamma)+\cos(\alpha)\sin(\beta)\sin(\gamma) \\ -\sin(\beta) & \sin(\alpha)\cos(\beta) & \cos(\alpha)\cos(\beta) \end{bmatrix}$$

Réécrivons les termes de l'équation d'erreur en fonction de cette matrice de changement de repère :

Notons : $C_{SNI_i}^{n} = C_{SNI}^{n}\left(\hat{\varphi}_i, \hat{\theta}_i, \hat{\psi}_i\right)$

Où les angles ($\hat{\varphi}_i, \hat{\theta}_i, \hat{\psi}_i$) sont les angles mesurés par la centrale. Ces angles ne sont pas à confondre avec les angles de désalignement ($\varphi$, $\theta$, $\Psi$).

$$\hat{\mathbf{u}}_{\mathbf{i}}{}^{n} = C_{SNI_i}^{n} R_{boresight}(0,0,0) C_{lidar}^{S\hat{N}I} \mathbf{u}_{\mathbf{i}}{}^{lidar} = C_{SNI_i}^{n} C_{mur}^{S\hat{N}I} \begin{bmatrix} 0 \\ 0 \\ 1 \end{bmatrix}^{mur}$$

$$\mathbf{N}^{n} = C_{SNI_i}^{n} R_{boresight}(\varphi, \theta, \psi) C_{mur}^{S\hat{N}I} \begin{bmatrix} 1 \\ 0 \\ 0 \end{bmatrix}^{mur}$$

Remplaçons ces expressions dans l'équation $\langle \tilde{\mathbf{u}}_i{}^{n}, \mathbf{N}^{n} \rangle$ afin de trouver les orientations pour lesquelles $\hat{\mathbf{u}}_i{}^{n}$ ne reste pas perpendiculaire au vecteur normal, sinon l'erreur n'est pas visible :

$$\left\langle \tilde{\mathbf{u}}_{\mathbf{i}}{}^{n}, \mathbf{N}^{n} \right\rangle = \left\langle C_{SNI_i}^{n} C_{mur}^{S\hat{N}I} \begin{bmatrix} 0 \\ 0 \\ 1 \end{bmatrix}^{mur} , C_{SNI_i}^{n} R_{boresight}(\varphi, \theta, \psi) C_{mur}^{S\hat{N}I} \begin{bmatrix} 1 \\ 0 \\ 0 \end{bmatrix}^{mur} \right\rangle$$

$$\left\langle \tilde{\mathbf{u}}_{\mathbf{i}}{}^{n}, \mathbf{N}^{n} \right\rangle = \begin{bmatrix} 0 & 0 & 1 \end{bmatrix} C_{S\hat{N}I}^{mur} C_{n}^{SNI_i} C_{SNI_i}^{n} R_{boresight}(\varphi, \theta, \psi) C_{mur}^{S\hat{N}I} \begin{bmatrix} 1 \\ 0 \\ 0 \end{bmatrix}^{mur}$$

L'expression peut être alors simplifiée :

$$\left\langle \tilde{\mathbf{u}}_{\mathbf{i}}^{\,n}, \mathbf{N}^{n} \right\rangle = \left( \begin{bmatrix} 0 & 0 & 1 \end{bmatrix} C_{S\hat{N}I}^{mur} \right)\ R_{boresight}\left( \varphi, \theta, \psi \right)\ \left( C_{mur}^{S\hat{N}I} \begin{bmatrix} 1 \\ 0 \\ 0 \end{bmatrix}^{mur} \right)$$

$$C_{mur}^{S\hat{N}I} \begin{bmatrix} 1 \\ 0 \\ 0 \end{bmatrix} = C_1$$

Où $\begin{bmatrix} 1 \\ 0 \\ 0 \end{bmatrix}$ représente la première colonne de la matrice $C_{mur}^{S\hat{N}I}$ et $\begin{bmatrix} 0 & 0 & 1 \end{bmatrix} C_{S\hat{N}I}^{mur} = C_3^{\,T}$ représente la transposée de la troisième colonne de $C_{mur}^{S\hat{N}I}$ Dans le cas où les angles d'Euler de désalignement ($\phi$, $\theta$, $\psi$) sont petits, on peut faire l'approximation :

$$R_{boresight}\left( \phi, \theta, \psi \right) = I + \begin{pmatrix} 0 & -\psi & \theta \\ \psi & 0 & -\phi \\ -\theta & \phi & 0 \end{pmatrix} = I + \left( \Omega \times \right), \text{ avec } \Omega = \begin{bmatrix} \phi \\ \theta \\ \psi \end{bmatrix}$$

L'équation devient alors :

$$\left\langle \tilde{\mathbf{u}}_{\mathbf{i}}^{\,n}, \mathbf{N}^{n} \right\rangle = C_3^{\,T} \left( I + \left( \Omega \times \right) \right) C_1$$

$$\left\langle \tilde{\mathbf{u}}_{\mathbf{i}}^{\,n}, \mathbf{N}^{n} \right\rangle = C_3^{\,T} C_1 + C_3^{\,T} \left( \Omega \times \right) C_1$$

Les colonnes des matrices de changement de repère sont orthogonales, par conséquent leur produit scalaire est nul.

$$\left\langle \tilde{\mathbf{u}}_{\mathbf{i}}^{\,n}, \mathbf{N}^{n} \right\rangle = \Omega^{T} \left( C_1 \times C_3 \right)$$

$$\left\langle \tilde{\mathbf{u}}_{\mathbf{i}}^{\,n}, \mathbf{N}^{n} \right\rangle = -\Omega^{T} C_2$$

En développant $C_2$, on obtient une formule représentant l'erreur en fonction des 3 angles de désalignement :

$$\begin{aligned} \left\langle \tilde{\mathbf{u}}_{\mathbf{i}}^{\,n}, \mathbf{N}^{n} \right\rangle = {}&\phi\left( \cos(\alpha)\sin(\gamma) - \sin(\alpha)\sin(\beta)\cos(\gamma) \right) \\ &+ \theta\left( -\cos(\alpha)\cos(\gamma) - \sin(\alpha)\sin(\beta)\sin(\gamma) \right) \\ &+ \psi\left( -\sin(\alpha)\cos(\beta) \right) \end{aligned}$$

Appliquons cette formule dans les deux cas concrets évoqués plus haut :

- balayage ou scanning d'un plan vertical 8
- balayage ou scanning d'un plan horizontal 9.

Sur les figures 9 et 10 on a représenté le repère 21 de la centrale de navigation SNI, et le repère d'un mur pris comme plan vertical sur la figure 9 et du sol pris comme plan horizontal sur la figure 10. Dans la suite, l'orientation relative entre le SNI et le lidar correspond à celle représentée sur la figure 2. Plus précisément, la figure 9 représente une vue de dessus du repère SNI et du repère du mur pendant un balayage du mur 8. La figure 10 représente une vue de côté du repère SNI et du repère du sol pendant un balayage du sol 9.

Pour le scan sur un plan vertical 8 (cf. figure 9), on se limite à des variations de l'angle de cap. L'angle $\xi$ est un angle orienté défini par rapport à la parallèle au mur dans un plan horizontal. Il correspond à l'angle de cap c défini plus haut.

Dans ce cas là, les valeurs des angles de la matrice de passage $C_{mur}^{S\hat{N}I}(\alpha,\beta,\gamma)$ :

$$\begin{cases} \alpha = \pi/2 - \xi \\ \beta = \pi \\ \gamma = 0 \end{cases}$$

$$\left\langle \tilde{\mathbf{u}}_{\mathbf{i}}^{\ n}, \mathbf{N}^n \right\rangle = \varphi\left(\sin\left(\pi/2 - \xi\right)\right) + \theta\left(-\cos\left(\pi/2 - \xi\right)\right)$$

$$\left\langle \tilde{\mathbf{u}}_{\mathbf{i}}^{\ n}, \mathbf{N}^n \right\rangle = \varphi\left(\cos\xi\right) + \theta\left(-\sin\xi\right)$$

On observe que l'erreur de cap $\Psi$ n'apparait pas dans l'expression ci-dessus. L'erreur de cap n'est donc pas mesurable en utilisant le produit scalaire avec la normale. D'autres orientations sont alors nécessaires pour estimer l'erreur de cap. On en déduit aussi que l'on peut estimer les erreurs de roulis et tangage indépendamment de l'erreur de cap.

Les orientations favorables à l'estimation de l'erreur de roulis sont celles correspondant à un SNI parallèle au mur, le plan LiDAR 27 étant perpendiculaire au mur. En effet dans ce cas $\xi$=0deg. et $\langle \hat{\mathbf{u}}_{\mathbf{i}}^{\ n}, \mathbf{N}^n \rangle \approx \varphi(\cos\xi)$. Avec des angles proches de 0 ou 180 deg., on peut même considérer que l'erreur de roulis peut être estimée indépendamment des erreurs de cap et de tangage.

Les orientations favorables à l'estimation de l'erreur de tangage sont celles pour lesquelles le SNI est presque perpendiculaire au mur, le plan Lidar 27 et le mur étant presque parallèles, cela veut dire que le mur est scanné de manière très rasante, à des angles proches de 90 ou -90 deg. En pratique, il est difficile d'avoir des angles supérieurs à 70 deg. Cet angle ne peut donc être estimé indépendamment de l'erreur de roulis.

En conclusion, dans le cas du balayage d'un mur vertical 8 :

- l'erreur de cap ne peut être estimée sur un plan vertical si le système lidar n'a pas de roulis/tangage ;
- l'erreur de roulis est estimée en scannant le mur lorsque le système lidar est parallèle à ce dernier ;
- l'erreur de tangage est estimée en scannant le mur lorsque le système lidar a une orientation la plus rasante possible par rapport au mur.

Pour obtenir l'erreur de cap, on scanne une autre surface, par exemple une surface horizontale 9 au sol, comme illustré sur la figure 10.

Dans le scan du plan horizontal 9, on se limite à des variations de l'angle de tangage. En effet, faire varier les angles de roulis et cap ne sert à rien dans cette configuration SNI-lidar, puisque cela ne ferait pas varier les angles $(\alpha,\beta,\gamma)$.

Sur la figure 10, l'angle $\xi$ est un angle orienté défini par rapport au sol. Il correspond à l'angle t défini plus haut (voir figure 7).

Dans ce cas, les valeurs des angles de la matrice de passage $C_{mur}^{S\hat{N}I}(\alpha,\beta,\gamma)$ :

$$\begin{cases} \alpha = 0 \\ \beta = \pi/2 - \xi \\ \gamma = -\pi/2 \end{cases}$$

$$\left\langle \tilde{\mathbf{u}}_{\mathbf{i}}{}^{n}, \mathbf{N}^{n} \right\rangle = \varphi\left( \sin\left( \pi/2 - \xi \right) \right) + \psi\left( \cos\left( \pi/2 - \xi \right) \right)$$

$$\left\langle \tilde{\mathbf{u}}_{\mathbf{i}}{}^{n}, \mathbf{N}^{n} \right\rangle = \varphi\left( \cos\xi \right) + \psi\left( \sin\xi \right)$$

En conclusion, pendant le scan d'un plan horizontal :

- l'erreur de tangage n'apparait pas dans l'expression, elle n'est donc pas visible en scannant un plan horizontal ;

- les orientations favorables à l'estimation de l'erreur de roulis sont celles correspondant à un système lidar à plat sur le sol. En effet dans ce cas

$$\xi = 0\text{deg. et} \left\langle \tilde{\mathbf{u}}_{\mathbf{i}}{}^{n}, \mathbf{N}^{n} \right\rangle \approx \varphi\left( \cos\xi \right).$$

- les orientations favorables à l'estimation de l'erreur de cap sont celles pour lesquelles le système lidar, présente un angle $\xi$ proche de $\pm\pi/2$ par rapport au sol.

Par conséquent, l'erreur de tangage ne peut pas être estimée sur un plan horizontal, mais l'erreur de cap peut être estimée en scannant le sol avec un angle $|\xi|$ suffisamment important.

En conclusion, le procédé de calibration est basé sur le scan de deux surfaces planes, de préférence un mur vertical et un sol horizontal, dans différentes orientations du système Lidar. La position du système lidar est de préférence statique entre les différentes orientations, seule l'inclinaison du système peut varier. Ce procédé de calibration permet de déterminer les erreurs d'alignement par une procédure relativement simple consistant par exemple à scanner le mur, le système lidar étant parallèle au mur, c'est-à-dire le plan LiDAR 27 étant perpendiculaire au mur et l'angle de roulis nul (cf figure 9 pour $\xi = 0$), puis à scanner le mur avec une incidence importante pour estimer les angles de désalignement de roulis $\Phi$ et de tangage $\theta$.

Enfin l'estimation de l'angle de désalignement en cap $\Psi$ est faite grâce à des mesures acquises sur un plan horizontal avec un angle de tangage important du système lidar (cf figures 7-8) afin de décorréler au maximum l'erreur de roulis et l'erreur de cap et de faire ressortir au maximum l'erreur de cap.

Par rapport aux solutions généralement utilisées pour la calibration SNI-lidar, l'invention présente notamment les avantages suivants.

Le procédé de calibration est insensible aux erreurs humaines. L'utilisateur n'a pas à repérer des points remarquables sur des images, il n'y a donc pas de risques d'erreurs dans le choix de ces points.

Le procédé de calibration est insensible aux erreurs de GPS. Le procédé est appliqué en une position statique, il n'est donc pas sensible aux erreurs de position et n'est pas dégradé par un fonctionnement anormal d'un GPS.

Le procédé de calibration est insensible aux biais du SNI. Les angles de désalignement (boresight) sont calculés dans un repère local de navigation, le calcul n'est pas affecté par des erreurs de cap ou d'attitude, car celles-ci sont constantes au cours des différentes mesures de scans.

Le procédé de calibration supprime ainsi les trois principales sources d'erreurs lors d'une calibration SNI-Lidar traditionnelle et permet donc d'obtenir une plus grande précision.

Les méthodes classiques de calibration des angles de désalignement ne permettent pas de calculer un facteur de qualité fiable. Au contraire, le procédé de calibration proposé permet de calculer un écart-type représentatif des incertitudes liées aux mesures de la calibration.

Enfin, la mise en oeuvre du procédé de calibration proposé est simple. Les méthodes classiques proposées jusqu'à présent imposent généralement de mettre en place le SNI et le Lidar sur un véhicule ainsi que de trouver un site dégagé pour avoir un signal GPS RTK très précis. La méthode proposée permet de calibrer un système Lidar en intérieur : il suffit de disposer d'un mur et d'une plateforme orientable pour générer plusieurs orientations du système. Ceci est particulièrement bien adapté à la fabrication de systèmes couplés SNI-lidar, qui peut ainsi réaliser la calibration en usine. L'utilisation d'une table à deux axes automatique peut permettre d'automatiser entièrement la calibration.

Enfin le procédé permet de réduire considérablement la durée du procédé de calibration. Les méthodes classiques imposent de nombreuses manipulations lors des acquisitions de mesure puis lors du traitement des mesures de calibration. La méthode proposée permet d'effectuer une calibration en quelques minutes une fois le système de navigation correctement aligné.

Enfin, il n'est pas nécessaire de disposer d'un lidar ayant une vitesse de rotation du miroir importante, puisque la calibration se fait de manière statique.

## Revendications

1. Procédé de calibration d'un système de navigation et de pointage (10) comprenant une centrale de navigation (11) reliée solidairement à un dispositif de pointage (12), la centrale de navigation étant configurée pour mesurer la position et l'orientation d'un repère (21) de ladite centrale de navigation (11), le dispositif de pointage (12) comprenant des moyens d'émission d'un faisceau dans une direction de pointage (17) et des moyens de balayage de la direction de pointage (17), le dispositif de pointage (12) étant configuré pour mesurer un signal de pointage, en fonction de la direction de pointage (17) dans un repère (22) lié au dispositif de pointage, le procédé de calibration comprenant les étapes suivantes de calibration des angles entre le repère (21) de ladite centrale de navigation (11) et le repère (22) lié au dispositif de pointage (12) :

   a. Estimation d'un repère approché (31) de navigation (11), le repère approché (31) de navigation étant incliné par rapport au repère (21) de navigation avec des angles d'Euler de désalignement $(\Phi, \theta, \Psi)$ ;
   b. Sélection d'une première surface plane (8) ;
   c. Détermination d'un vecteur normal ($N_8$) à ladite première surface plane dans le repère (21) de navigation ;
   d. Orientation du système de navigation et de pointage (10) dans une pluralité d'orientations angulaires distinctes par rapport à la première surface plane (8) ladite pluralité d'orientations angulaires étant déterminées dans le repère (21) de la centrale de navigation (11) ;
   e. Balayage de la direction de pointage (17) de manière à acquérir, au moyen du dispositif de pointage (12), pour chacune des orientations de ladite pluralité d'orientations par rapport à la première surface plane (8), une série de mesures de pointage suivant une ligne de balayage (41, 42, 43) sur la première surface plane (8) ;
   f. Traitement de chacune desdites séries de mesures de pointage suivant une ligne de balayage (41, 42, 43) sur la première surface plane (8) de manière à déterminer, dans le repère (22) lié au dispositif de pointage, un vecteur directeur approché ($\hat{u}_1, \hat{u}_2, \hat{u}_3$) de chaque ligne de balayage (41, 42, 43) sur la première surface plane (8) ;
   g. Traitement d'une pluralité de vecteurs directeurs approchés ($\hat{u}_1, \hat{u}_2, \hat{u}_3$) d'une pluralité de lignes de balayage (41, 42, 43) sur la première surface plane pour en déduire un vecteur normal approché ($\hat{N}_8$) de la première surface plane (8) ;
   h. Calcul d'au moins un angle de désalignement $(\Phi, \theta, \Psi)$ entre le vecteur normal approché ($\hat{N}_8$) déterminé à l'étape précédente dans le repère de navigation approché et le vecteur normal ($N_8$) déterminé à l'étape c) dans le repère (21) de la centrale de navigation (11).

2. Procédé de calibration d'un système de navigation et de pointage (10) selon la revendication 1 comportant en outre les étapes suivantes :

   i. Sélection d'une deuxième surface plane (9), de préférence horizontale ;
   j. Détermination d'un vecteur normal (N9) à ladite deuxième surface plane (9) dans le repère (21) de navigation ;
   k. Orientation du système de navigation et de pointage (10) dans une pluralité d'orientations angulaires distinctes par rapport à la deuxième surface plane (9), ladite pluralité d'orientations angulaires étant déterminées dans le repère (21) de la centrale de navigation (11) ;
   l. Balayage de la direction de pointage (17) de manière à acquérir, au moyen du dispositif de pointage (12), pour chacune des orientations de ladite pluralité d'orientations par rapport à la deuxième surface plane (9), une série de mesures de pointage suivant une ligne de balayage (45, 46) sur la deuxième surface plane (9) ;
   m. Traitement de chacune desdites séries de mesures de pointage suivant une ligne de balayage (45, 46) sur la deuxième surface plane (9) de manière à déterminer, dans le repère (22) lié au dispositif de pointage, un vecteur directeur approché ($\hat{u}_5, \hat{u}_6$) de chaque ligne de balayage (45, 46) sur la deuxième surface plane (9) ;
   n. Traitement d'une pluralité de vecteurs directeurs approchés ($\hat{u}_5, \hat{u}_6$) d'une pluralité de lignes de balayage (45, 46) sur la deuxième surface plane (9) pour en déduire un vecteur normal approché ($\hat{N}_9$) de la deuxième

surface plane (9);

o. Calcul d'au moins un autre angle de désalignement ($\Phi$, $\theta$, $\Psi$) entre le vecteur normal approché ($\hat{N}_9$) déterminé à l'étape précédente dans le repère de navigation approché et le vecteur normal ($\hat{N}_9$) déterminé à l'étape j) dans le repère (21) de la centrale de navigation (11).

3. Procédé de calibration selon la revendication 2 dans lequel ladite pluralité d'orientations angulaires comporte les deux orientations angulaires suivantes du système de navigation et de pointage (10) par rapport à la deuxième surface plane (9) où r désigne l'angle de roulis, t l'angle de tangage et c l'angle de cap du système de navigation et de pointage par rapport à un repère local ayant des axes X et Y dans le plan horizontal, et l'axe X parallèle au plan de la première surface plane :

   - Orientation 5 : (r, t, c) = (0, 55 $\pm$ 25 deg., 0)
   - Orientation 6 : (r, t, c) = (0, -55 $\pm$ 25 deg., 0).

4. Procédé de calibration selon l'une des revendications 1 à 3 dans lequel ladite pluralité d'orientations angulaires comporte les quatre orientations angulaires du système de navigation et de pointage (10) par rapport à la première surface plane (8) suivantes où r désigne l'angle de roulis, t l'angle de tangage et c l'angle de cap du système de navigation et de pointage par rapport à un repère local ayant des axes X et Y dans le plan horizontal, et l'axe X parallèle au plan de la première surface plane :

   - Orientation 1 : (r, t, c) = (0, 0, 0 $\pm$ 5 deg.)
   - Orientation 2 : (r, t, c) = (0, 0, 180 $\pm$ 5 deg.)
   - Orientation 3 : (r, t, c) = (0, 0, 55 $\pm$ 25 deg.)
   - Orientation 4 : (r, t, c) = (0, 0, -55 $\pm$ 25 deg.).

5. Procédé de calibration selon l'une des revendications précédentes, dans lequel l'étape e) et/ou l'étape l) comporte une pluralité de balayage d'une même ligne de balayage et en ce que ladite série de mesures de pointage suivant une ligne de balayage (41, 42, 43, 45, 46) est obtenue par un calcul de moyenne de la pluralité de balayage d'une même ligne de scan.

6. Procédé de calibration selon l'une des revendications précédentes, dans lequel l'étape g) et/ou l'étape n) de détermination d'un vecteur normal approché comporte une étape de détermination d'un vecteur propre associé à la plus petite valeur propre d'une analyse en composantes principales des séries de mesures de pointage suivant ladite pluralité de lignes de balayage ou une étape de calcul d'une moyenne d'une pluralité de vecteurs normaux mesurés par produit vectoriel des vecteurs directeurs approchés de deux lignes de scan différentes déterminés à l'étape f) et/ou à l'étape m).

7. Procédé de calibration selon l'une des revendications précédentes, dans lequel l'étape h) et/ou l'étape o) de calcul des angles de désalignement ($\Phi$, $\theta$, $\Psi$) comporte une étape de maximisation d'un produit scalaire $< \hat{u}_i, \hat{N}>$ pour en déduire une estimation d'un angle de désalignement, ladite étape de maximisation comportant une étape de traitement par une méthode de régression des moindres carrés non linéaires ou par une méthode de régression des moindres carrés linéaires ou une méthodes de Quasi-Newton.

8. Procédé de calibration selon l'une des revendications précédentes, comportant une étape de calcul d'un indicateur de précision des angles de désalignement ($\Phi$, $\theta$, $\Psi$).

9. Système de navigation et de pointage (10) comprenant une centrale de navigation (11) reliée solidairement à un dispositif de pointage (12), la centrale de navigation étant configurée pour mesurer la position et l'orientation d'un repère (21) de ladite centrale de navigation (11), le dispositif de pointage (12) comprenant des moyens d'émission d'un faisceau dans une direction de pointage (17) et des moyens de balayage de la direction de pointage (17), le dispositif de pointage (12) étant configuré pour mesurer un signal de pointage, de préférence par réflexion ou rétro-diffusion dudit faisceau sur une cible, en fonction de la direction de pointage (17) dans un repère (22) lié au dispositif de pointage, le système de navigation comprenant des moyens de traitement des mesures de position et d'orientation de la centrale de navigation et des moyens de traitement du signal de pointage, et des moyens de calibration adaptés pour implémenter une calibration angulaire entre le repère (21) de ladite centrale de navigation (11) et le repère (22) de pointage suivant un procédé de calibration selon l'une des revendications 1 à 7.

10. Système de navigation et de pointage (10) selon la revendication 9 dans lequel ladite centrale de navigation (11) comporte un système d'orientation parmi une centrale de navigation inertielle ou une centrale d'attitude de type AHRS et/ou un système de positionnement de type GPS.

11. Système de navigation et de pointage (10) selon l'une des revendications 9 à 10 dans lequel le dispositif de pointage (12) comporte un lidar à balayage suivant un plan en deux dimensions, un lidar à balayage en trois dimensions ou un sonar.

12. Système de navigation et de pointage (10) selon l'une des revendications 9 à 11 comportant en outre des moyens d'orientations angulaire dudit système de navigation et de pointage (10), adaptés pour orienter ledit système de navigation et de pointage (10) dans une pluralité d'orientations angulaires distinctes par rapport à ladite première surface plane (8) et/ou, respectivement, à ladite deuxième surface plane (9).

**Patentansprüche**

1. Kalibrierungsverfahren eines Navigations- und Zielsystems (10), das eine Navigationszentrale (11) aufweist, die mit einem Zielgerät (12) fest verbunden ist, wobei die Navigationszentrale dazu ausgelegt ist, die Position und die Orientierung eines Bezugspunkts (21) der Navigationszentrale (11) zu messen, wobei das Zielgerät (12) Mittel zum Aussenden eines Strahls in eine Zielrichtung (17) und Mittel zum Abtasten der Zielrichtung (17) aufweist, wobei das Zielgerät (12) dazu ausgelegt ist, in Abhängigkeit von der Zielrichtung (17) in einem mit dem Zielgerät verbundenen Bezugspunkt (22) ein Zielsignal zu messen, wobei das Kalibrierungsverfahren die folgenden Schritte zum Kalibrieren der Winkel zwischen dem Bezugspunkt (21) der Navigationszentrale und dem mit dem Zielgerät (12) verbundenen Bezugspunkt (22) aufweist:

a. Abschätzen eines angenäherten Bezugspunkts (31) der Navigation (11), wobei der angenäherte Bezugspunkt (31) gegenüber dem Navigationsbezugspunkt (21) mit Eulerschen Versatzwinkeln ($\Phi$, $\Theta$, $\Psi$) geneigt ist;
b. Auswahl einer ersten ebenen Oberfläche (8);
c. Bestimmen eines im Navigationsbezugspunkt (21) zur ersten ebenen Oberfläche senkrechten Vektors ($N_8$);
d. Orientieren des Navigations- und Zielsystems (10) in einer Anzahl einzelner Winkelorientierungen gegenüber der ersten ebenen Oberfläche (8), wobei die Anzahl Winkelorientierungen im Bezugspunkt (21) der Navigationszentrale (11) bestimmt ist;
e. Abtasten der Zielrichtung (17), um mittels des Zielgeräts (12) für jede der Orientierungen der besagten Anzahl Orientierungen gegenüber der ersten ebenen Oberfläche (8) entlang einer Abtastlinie (41, 42, 43) auf der ersten ebenen Oberfläche (8) eine Reihe Zielmessungen zu erhalten;
f. Verarbeiten jeder der Reihe Zielmessungen entlang einer Abtastlinie (41, 42, 43) auf der ersten ebenen Oberfläche (8), um an dem mit dem Zielgerät verbundenen Bezugspunkt (22) einen angenäherten Orientierungsvektor ($\hat{u}_1$, $\hat{u}_2$, $\hat{u}_3$) jeder Abtastlinie (41, 42, 43) auf der ersten ebenen Oberfläche (8) zu bestimmen;
g. Verarbeiten einer Anzahl angenäherter Orientierungsvektoren ($\hat{u}_1$, $\hat{u}_2$, $\hat{u}_3$) einer Anzahl Abtastlinien (41, 42, 43) auf der ersten ebenen Oberfläche, um daraus einen angenäherten Normalvektor ($\hat{N}_8$) der ersten ebenen Oberfläche (8) zu erhalten;
h. Berechnen wenigstens eines Versatzwinkels ($\Phi$, $\theta$, $\Psi$) zwischen dem im vorangehenden Schritt bestimmten angenäherten Normalvektor ($\hat{N}_8$) im angenäherten Navigationsbezugspunkt und dem im Schritt c) im Bezugspunkt (21) der Navigationszentrale (11) bestimmten Normalvektor ($N_8$).

2. Kalibrierungsverfahren eines Navigations- und Zielsystems (10) gemäß Anspruch 1, das außerdem die folgenden Schritte aufweist:

i. Auswahl einer zweiten, vorzugsweise horizontalen ebenen Oberfläche (9);
j. Bestimmen eines im Navigationsbezugspunkt (21) zur zweiten ebenen Oberfläche (9) senkrechten Vektors ($N_9$);
k. Orientieren des Navigations- und Zielsystems (10) in einer Anzahl einzelner Winkelorientierungen gegenüber der zweiten ebenen Oberfläche (9), wobei die Anzahl Winkelorientierungen im Bezugspunkt (21) der Navigationszentrale (11) bestimmt ist;
1. Abtasten der Zielrichtung (17), um mittels des Zielgeräts (12) für jede der Orientierungen der besagten Anzahl Orientierungen gegenüber der zweiten ebenen Oberfläche (9) entlang einer Abtastlinie (45, 46) auf der zweiten ebenen Oberfläche (9) eine Reihe Zielmessungen zu erhalten;
m. Verarbeiten jeder der Reihe Zielmessungen entlang einer Abtastlinie (45, 46) auf der zweiten ebenen Oberfläche (9), um an dem mit dem Zielgerät verbundenen Bezugspunkt (22) einen angenäherten Orientierungs-

vektor ($\hat{u}_5$, $\hat{u}_6$) jeder Abtastlinie (45, 46) auf der zweiten ebenen Oberfläche (9) zu bestimmen;

n. Verarbeiten einer Anzahl angenäherter Orientierungsvektoren ($\hat{u}_5$, $\hat{u}_6$) einer Anzahl Abtastlinien (45, 46) auf der zweiten ebenen Oberfläche (9), um daraus einen angenäherten Normalvektor ($N_9$) der zweiten ebenen Oberfläche (9) zu erhalten;

o. Berechnen wenigstens eines anderen Versatzwinkels ($\Phi$, $\Theta$, $\Psi$) zwischen dem im vorangehenden Schritt bestimmten angenäherten Normalvektor im angenäherten Navigationsbezugspunkt und dem im Schritt c) im Bezugspunkt (21) der Navigationszentrale (11) bestimmten Normalvektor ($N_9$).

3. Kalibrierungsverfahren gemäß Anspruch 2, bei dem die Anzahl Winkelorientierungen die beiden folgenden Winkelorientierungen des Navigations- und Zielsystems (10) gegenüber der zweiten ebenen Oberfläche (9) aufweist, wobei r den Rollwinkel, t den Nickwinkel und c den Kurswinkel des Navigations- und Zielsystems gegenüber einem lokalen Bezugspunkt mit den Achsen X und Y in der horizontalen Ebene und der Achse X parallel zur Ebene der ersten ebenen Oberfläche bezeichnet:

   - Orientierung 5 : (r, t, c) = (0, 55 + 25 Grad, 0)
   - Orientierung 6 : (r, t, c) = (0, -55 + 25 Grad, 0).

4. Kalibrierungsverfahren gemäß einem der Ansprüche 1 bis 3, bei dem die Anzahl Winkelorientierungen die vier folgenden Winkelorientierungen des Navigations- und Zielsystems (10) gegenüber der ersten ebenen Oberfläche (8) aufweist, wobei r den Rollwinkel, t den Nickwinkel und c den Kurswinkel des Navigations- und Zielsystems gegenüber einem lokalen Bezugspunkt mit den Achsen X und Y in der horizontalen Ebene und der Achse X parallel zur Ebene der ersten ebenen Oberfläche bezeichnet:

   - Orientierung 1 : (r, t, c) = (0, 0, 0 $\pm$ 5 Grad)
   - Orientierung 2 : (r, t, c) = (0, 0, 180 $\pm$ 5 Grad)
   - Orientierung 3 : (r, t, c) = (0, 0, 55 $\pm$ 25 Grad)
   - Orientierung 4 : (r, t, c) = (0, 0, -55 $\pm$ 25 Grad).

5. Kalibrierungsverfahren gemäß einem der vorangehenden Ansprüche, bei dem der Schritt e) und/oder der Schritt 1) eine Anzahl Abtastungen einer selben Abtastlinie aufweist und die Reihe Zielmessungen entlang einer Abtastlinie (41, 42, 43, 45, 46) durch eine Berechnung des Mittelwerts der Anzahl Abtastungen einer selben Scanlinie erhalten wird.

6. Kalibrierungsverfahren gemäß einem der vorangehenden Ansprüche, bei dem der Schritt g) und/oder der Schritt n) des Bestimmens eines angenäherten Normalvektors einen Schritt des Bestimmens eines dem kleinsten Eigenwert einer Analyse nach Hauptkomponenten der Reihen Zielmessungen entlang der Anzahl Ziellinien zugeordneten Eigenvektors oder einen Schritt des Berechnens eines Mittelwerts einer Anzahl gemessener Normalvektoren durch ein Vektorprodukt der angenäherten Richtungsvektoren der beiden im Schritt f) und/oder im Schritt m) bestimmten verschiedenen Scanlinien aufweist.

7. Kalibrierungsverfahren gemäß einem der vorangehenden Ansprüche, bei dem der Schritt h) und/oder der Schritt o) des Berechnens der Versatzwinkel ($\Phi$, $\Theta$, $\Psi$) einen Schritt der Maximierung eines skalaren Produkts $< \hat{u}, \hat{N} >$ aufweist, um daraus eine Abschätzung eines Versatzwinkels abzuleiten, wobei der Schritt des Maximierens einen Schritt der Verarbeitung durch eine Regression der kleinsten nichtlinearen Quadrate oder ein Quasi-Newton-Verfahren aufweist.

8. Kalibrierungsverfahren gemäß einem der vorangehenden Ansprüche, das einen Schritt der Berechnung eines Genauigkeitsindikators für die Versatzwinkel ($\Phi$, $\Theta$, $\Psi$) aufweist.

9. Navigations- und Zielsystem (10) mit einer Navigationszentrale (11), die mit einem Zielgerät (12) fest verbunden ist, wobei die Navigationszentrale dazu ausgelegt ist, die Position und die Orientierung eines Bezugspunkts (21) der Navigationszentrale (11) zu messen, wobei das Zielgerät (12) Mittel zum Aussenden eines Strahls in eine Zielrichtung (17) und Mittel zum Abtasten der Zielrichtung (17) aufweist, wobei das Zielgerät (12) dazu ausgelegt ist, in Abhängigkeit von der Zielrichtung (17) in einem mit dem Zielgerät verbundenen Bezugspunkt (22) ein Zielsignal zu messen, vorzugsweise durch Reflexion oder durch Rückstreuung des Strahls auf einem Ziel, wobei das Navigationssystem Mittel zum Verarbeiten der Positions- und Orientierungsmessungen der Navigationszentrale und Mittel zum Verarbeiten des Zielsignals sowie Kalibrierungsmittel, die dazu ausgelegt sind, eine Winkelkalibrierung zwischen dem Bezugspunkt (21) der Navigationszentrale (11) und dem Zielbezugspunkt (22) gemäß einem Kalibrierungsverfahren gemäß einem der Ansprüche 1 bis 7 auszuführen, aufweist.

**10.** Navigations- und Zielsystem (10) gemäß Anspruch 9, bei dem die Navigationszentrale (11) ein Orientierungssystem, und zwar eine Trägheitsnavigationszentrale oder eine Lagesteuerungszentrale vom Typ AHRS und/oder ein Positionierungssystem vom Typ GPS aufweist.

**11.** Navigations- und Zielsystem (10) gemäß einem der Ansprüche 9 bis 10, bei dem das Zielgerät (12) ein Lidar zum Abtasten in einer zweidimensionalen Ebene, ein Lidar zum dreidimensionalen Abtasten oder ein Sonar aufweist.

**12.** Navigations- und Zielsystem (10) gemäß einem der Ansprüche 9 bis 11, das außerdem Mittel zur winkelmäßigen Orientierung des Navigations- und Zielsystems (10) aufweist, die dazu ausgelegt sind, das Navigations- und Zielsystem (10) in einer Anzahl einzelner Winkelorientierungen gegenüber der ersten ebenen Oberfläche (8) und/oder der zweiten ebenen Oberfläche (9) zu orientieren.

**Claims**

**1.** A method of calibration of a navigation and pointing system (10) comprising a navigation unit (11) integrally connected to a pointing device (12), the navigation unit being configured to measure the position and the orientation of a reference system (21) of said navigation unit (11), the pointing device (12) comprising means for emitting a beam in a pointing direction (17) and means for varying the pointing direction (17), the pointing device (12) being configured to measure a pointing signal, as a function of the pointing direction (17) in a reference system (22) linked to the pointing device, the calibration method comprising the following steps of calibration of the angles between the reference system (21) of said navigation unit (11) and the reference system (22) linked to the pointing device (12):

a. Estimating an approached navigation (11) reference system (31), the approached navigation reference system (31) being inclined with respect to the navigation reference system (21) with misalignment Euler angles $(\Phi, \theta, \Psi)$;
b. Selecting a first planar surface (8);
c. Determining a vector $(N_8)$ normal to said first planar surface in the navigation reference system (21);
d. Directing the navigation and pointing system (10) in a plurality of distinct angular orientations with respect to the first planar surface (8), said plurality of angular orientations being determined in the reference system (21) of the navigation unit (11);
e. Varying the pointing direction (17) so as to acquire, by means of the pointing device (12), for each of the orientations of said plurality of orientations with respect to the first planar surface (8), a series of pointing measurements along a scan line (41, 42, 43) on the first planar surface (8);
f. Processing each of said series of pointing measurements along a scan line (41, 42, 43) on the first planar surface (8), so as to determine, in the reference system (22) linked to the pointing device, an approached direction vector $(\hat{u}_1, \hat{u}_2, \hat{u}_3)$ of each scan lines (41, 42, 43) on the first planar surface (8);
g. Processing a plurality of approached direction vectors $(\hat{u}_1, \hat{u}_2, \hat{u}_3)$ of a plurality of scan lines (41, 42, 43) on the first planar surface, to deduce therefrom an approached normal vector $(\hat{N}_8)$ of the first planar surface (8);
h. Calculating at least one misalignment angle $(\Phi, \theta, \Psi)$ between the approached normal vector $(\hat{N}_3)$ determined at the previous step in the approached navigation reference system and the normal vector $(N_8)$ determined a step c) in the reference system (21) of the navigation unit (11).

**2.** The method of calibration of a navigation and pointing system (10) according to claim 1, further including the following steps:

i. Selecting a second, preferably horizontal, planar surface (9);
j. Determining a vector $(\hat{N}_9)$ normal to said second planar surface (9) in the navigation reference system (21);
k. Directing the navigation and pointing system (10) in a plurality of distinct angular orientations with respect to the second planar surface (9), said plurality of angular orientations being determined in the reference system (21) of the navigation unit (11);
l. Varying the pointing direction (17) so as to acquire, by means of the pointing device (12), for each of the orientations of said plurality of orientations with respect to said second planar surface (9), a series of pointing measurements along a scan line (45, 46) on the second planar surface (9);
m. Processing each of said series of pointing measurements along a scan line (45, 46) on the second planar surface (9) so as to determine, in the reference system (22) linked to the pointing device, an approached direction vector $(\hat{u}_5, \hat{u}_6)$ of each scan line (45, 46) on the second planar surface (9);

n. Processing a plurality of approached direction vectors ($\hat{u}_5$, $\hat{u}_6$) of a plurality of scan lines (45, 46) on the second planar surface (9) to deduce therefrom an approached normal vector ($\hat{N}_9$) of the second planar surface (9);

o. Calculating at least another misalignment angle ($\Phi$, $\theta$, $\Psi$) between the approached normal vector ($\hat{N}_9$) determined at the previous step in the approached navigation reference system and the normal vector ($N_9$) determined at step j) in the reference system (21) of the navigation unit (11).

3. The calibration method according to claim 2, wherein said plurality of angular orientations includes the following two angular orientations of the navigation and pointing system (10) with respect to the second planar surface (9), where r denotes the roll angle, t the pitch angle and c the heading angle of the navigation and pointing system with respect to a local reference system having axes X and Y in the horizontal plane, and the axis X parallel to the plane of the first planar surface:

- Orientation 5 : (r, t, c) = (0, 55 $\pm$ 25 deg., 0)
- Orientation 6 : (r, t, c) = (0, -55 $\pm$ 25 deg., 0).

4. The calibration method according to one of claims 1 to 3, wherein said plurality of angular orientations includes the following four angular orientations of the navigation and pointing system (10) with respect to the first planar surface (8), where r denotes the roll angle, t the pitch angle and c the heading angle of the navigation and pointing system with respect to a local reference system, having axes X and Y in the horizontal plane and the axis X parallel to the plane of the first planar surface:

- Orientation 1 : (r, t, c) = (0, 0, 0 $\pm$ 5 deg.)
- Orientation 2 : (r, t, c) = (0, 0, 180 $\pm$ 5 deg.)
- Orientation 3 : (r, t, c) = (0, 0, 55 $\pm$ 25 deg.)
- Orientation 4 : (r, t, c) = (0, 0, -55 $\pm$ 25 deg.).

5. The calibration method according to one of the preceding claims, wherein step e) and/or step l) includes a plurality of scans of a same scan line and wherein said series of pointing measurements along a scan line (41, 42, 43, 45, 46) is obtained by calculation of an average of the plurality of scans of a same scan line.

6. The calibration method according to one of the preceding claims, wherein step g) and/or step n) of determining an approached normal vector includes a step of determining an eigenvector associated with the smallest eigenvalue of a main component analysis of the series of pointing measurements along said plurality of scan lines or a step of calculation of an average of a plurality of normal vectors measured by vector product of the approached direction vectors of two different scan lines determined at step f) and/o at step m).

7. The calibration method according to one of the preceding claims, wherein step h) and/or step o) of calculation of the misalignment angles ($\Phi$, $\theta$, $\Psi$) includes a step of maximisation of a scalar product $< \hat{u}_i, \hat{N} >$ to deduce therefrom an estimation of a misalignment angle, said step of maximization including a step of processing by a nonlinear least squares regression method or by a linear least squares regression method or a Quasi-Newton method.

8. The calibration method according to one of the preceding claims, including a step of calculation of an indicator of accuracy of the misalignment angles ($\Phi$, $\theta$, $\Psi$).

9. A navigation and pointing system (10) comprising a navigation unit (11) integrally connected to a pointing device (12), the navigation unit being configured to measure the position and orientation of a reference system (21) of said navigation unit (11), the pointing device (12) comprising means for emitting a beam in a pointing direction (17) and means for varying the pointing direction (17), the pointing device (12) being configured to measure a pointing signal, preferably by reflection or backscattering of said beam on a target, as a function of the pointing direction (17) in a reference system (22) linked to the pointing device, the navigation system comprising means for processing measurements of position and orientation of the navigation unit and means for processing the pointing signal, and calibration means adapted to implement an angular calibration between the reference system (21) of said navigation unit (11) and the pointing reference system (22) following a calibration method according to one of claims 1 to 7.

10. The navigation and pointing system (10) according to claim 9, wherein said navigation unit (11) includes an orientation system among an inertial navigation unit or an attitude unit of the AHRS type and/or a positioning system of the GPS type.

**11.** The navigation and pointing system (10) according to one of claims 9 to 10, wherein said pointing device (12) includes a two-dimensional-plane scanning lidar, a three-dimensional scanning lidar, or a sonar.

**12.** The navigation and pointing system (10) according to one of claims 9 to 11, further including means for angular orientation of said navigation and pointing system (10), adapted to direct said navigation and pointing system (10) in a plurality of distinct angular orientations with respect to said first planar surface (8) and/or, respectively, to said second planar surface (9).

# Fig.1

# Fig.2

**Fig.3**

**Fig.4**

EP 2 818 829 B1

Fig.5

Fig.6

26

**Fig.7**

**Fig.8**

**Fig.9**

**Fig.10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. HEBEL ; U. STILLA.** Simultaneous Calibration of ALS Systems and Alignment of Multiview LiDAR Scans of Urban Areas. *IEEE Transactions on Geoscience and Remote Sensing,* Juin 2012, vol. 50 (8
- **A. SOLOVIEV ; D. BATES ; F. VAN GRAAS.** Tight Coupling of Laser Scanner and Inertial Measurements for a Fully Autonomous Relative Navigation Solution. *Navigation : Journal of the Institute of Navigation,* 2007, vol. 54 (3
- **K. KRIS MORIN ; NASER EL-SHEIMY.** Post-mission adjustment methods of airborne laser scanning data. *FIG XXII International Congress,* 2002

- **CHAO GAO ; SPLETZER, J.R.** On-line calibration of multiple lidars on a mobile vehicle platform. *Robotics and Automation (ICRA), 2010 IEEE International Conference,* 03 Mai 2010, 279, , 284
- **SKALOUD, J. ; LITCHI, D.** Rigorous approach to boresight self-calibration in airborne laser scanning. *ISPRS Journal of Photogrammetry & remote Sensing,* 2006, vol. 61, 47-59
- **SKALOUD, J. ; SCHAER, P.** Towards automated lidar boresight self-calibration. *Proc. 5th International Symposium on Mobile Mapping Technology,* Mai 2007, 6
- **RIEGER, P. ; STUDNICKA, N. ; PFENNIGBAUER, M. ; ZACH, G.** Boresight alignment method for mobile laser scanning systems. *Journal of Applied Geodesy,* vol. 4 (1), 13-21